(19) Europäisches Patentamt
European Patent Office
Office européen des brevets

(11) **EP 4 304 275 A1**

(12) **EUROPEAN PATENT APPLICATION**
published in accordance with Art. 153(4) EPC

(43) Date of publication:
**10.01.2024 Bulletin 2024/02**

(21) Application number: **22796199.2**

(22) Date of filing: **29.04.2022**

(51) International Patent Classification (IPC):
**H04W 72/04** *(2023.01)* **H04W 72/02** *(2009.01)*
**H04W 4/40** *(2018.01)* **H04W 92/18** *(2009.01)*

(52) Cooperative Patent Classification (CPC):
**H04W 4/40; H04W 72/02; H04W 72/04;
H04W 92/18**

(86) International application number:
**PCT/KR2022/006148**

(87) International publication number:
**WO 2022/231367 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.04.2021 KR 20210055966**
**11.05.2021 KR 20210060950**

(71) Applicant: Samsung Electronics Co., Ltd.
**Suwon-si, Gyeonggi-do 16677 (KR)**

(72) Inventors:
• **SHIN, Cheolkyu**
**Suwon-si Gyeonggi-do 16677 (KR)**
• **RYU, Hyunseok**
**Suwon-si Gyeonggi-do 16677 (KR)**
• **KIM, Youngbum**
**Suwon-si Gyeonggi-do 16677 (KR)**
• **YEO, Jeongho**
**Suwon-si Gyeonggi-do 16677 (KR)**

(74) Representative: **Nederlandsch Octrooibureau**
**P.O. Box 29720**
**2502 LS The Hague (NL)**

(54) **METHOD AND DEVICE FOR RESOURCE ALLOCATION IN WIRELESS COMMUNICATION SYSTEM THROUGH SIDELINK INTER-UE COORDINATION**

(57) The present invention relates to communication technology combining IoT technology with a 5G communication system for supporting higher data rates than 4G systems, and a system therefor. The present invention can be applied to intelligent services (for example, smart homes, smart buildings, smart cities, smart cars or connected cars, healthcare, digital education, retail businesses, security and safety-related services, and the like) on the basis of 5G communication technology and IoT-related technology. Further, the present invention provides a method and device for resource allocation in a wireless communication system through sidelink inter-UE coordination.

FIG. 12A

**Description**

**[Technical Field]**

The disclosure relates to a wireless mobile communication system and, more particularly, to a method and apparatus that enable a vehicle user equipment (UE) supporting vehicle-to-everything (V2X) to perform resource allocation through inter-UE coordination in a process of transmitting and receiving information to and from another vehicle UE and a pedestrian portable UE using a sidelink.

**[Background Art]**

Since the commercialization)of 4G communication systems, efforts have been made to develop improved 5G or pre-5G communication systems to meet the ever increasing demand for wireless data traffic. As such, 5G or pre-5G communication systems are also called "beyond 4G network" or "post LTE system". To achieve higher data rates, 5G communication systems are being considered for implementation in the extremely high frequency (mmWave) band (e.g., 60 GHz band). To decrease path loss and increase the transmission distance in the mmWave band, various technologies including beamforming, massive multiple-input multiple-output (massive MIMO), full dimensional MIMO (FD-MIMO), array antennas, analog beamforming, and large scale antennas are considered for 5G communication systems. Additionally, to improve system networks in 5G communication systems, technology development is under way regarding evolved small cells, advanced small cells, cloud radio access networks (cloud RANs), ultra-dense networks, device-to-device (D2D) communication, wireless backhaul, moving networks, cooperative communication, coordinated multi-points (CoMP), interference cancellation, and the like. In addition, advanced coding and modulation (ACM) schemes such as hybrid FSK and QAM modulation (FQAM) and sliding window superposition coding (SWSC), and advanced access technologies such as filter bank multi carrier (FBMC), non-orthogonal multiple access (NOMA), and sparse code multiple access (SCMA) are also under development for 5G communication systems.

Meanwhile, the Internet is evolving from a human centered network where humans create and consume information into the Internet of Things (IoT) where distributed elements or things process and exchange information. There has also emerged the Internet of Everything (IoE) technology that combines IoT technology with big data processing technology through connection with cloud servers. To realize IoT services, base technologies related to sensing, wired/wireless communication and network infrastructure, service interfacing, and security are needed, and technologies interconnecting things such as sensor networks, machine-to-machine (M2M) or machine type communication (MTC) are under development. In IoT environments, it is possible to provide intelligent Internet technology services, which collect and analyze data created by interconnected things to add new values to human life. Through convergence and combination between existing information technologies and various field technologies, IoT technology may be applied to various areas such as smart homes, smart buildings, smart cities, smart or connected cars, smart grids, health-care, smart consumer electronics, and advanced medical care.

Accordingly, various attempts are being made to apply 5G communication systems to IoT networks. For example, sensor networks and machine-to-machine or machine type communication are being realized by use of 5G communication technologies including beamforming, MIMO, and array antennas. Application of cloud RANs as a big data processing technique described above may be an instance of convergence of 5G technology and IoT technology.

**[Disclosure of Invention]**

**[Technical Problem]**

The disclosure relates to a wireless communication system, and relates to a method and apparatus for selecting a transmission resource through inter-UE coordination in a process in which a vehicle UE supporting V2X exchanges information with another vehicle UE or a pedestrian portable UE using a sidelink. Specifically, it relates to a method of exchanging information for inter-UE coordination and allocating sidelink transmission resources therethrough, and to operations of a base station and a UE for the method.

**[Solution to Problem]**

A first user equipment (UE) in a wireless communication system according to an embodiment of the disclosure for achieving the above-described technical objective may include: a transceiver; and a controller that is configured to determine to transmit inter-UE coordination information to a second UE according to inter-UE coordination scheme 1, trigger transmission of the inter-UE coordination information, transmit the inter-UE coordination information to the second UE, and receive a signal transmitted by the second UE based on the inter-UE coordination information, wherein the inter-UE coordination information may include information about a resource set and type information of the resource set, wherein the type information of the resource set may indicate whether the resource set is a preferred resource or a non-preferred resource.

In addition, a second user equipment (UE) in a wireless communication system according to an embodiment of the disclosure may include: a transceiver; and a controller that is configured to receive inter-UE coordination information from a first UE, and transmit a signal to the first UE based on the inter-UE coordination information, wherein the inter-UE coordination information may include information about a resource set and type information of the resource set, wherein the type information of the resource set may indicate whether the resource set is a preferred resource or a non-preferred resource.

In addition, a method of a first user equipment (UE) in a wireless communication system according to an embodiment of the disclosure may include: determining to transmit inter-UE coordination information to a second UE according to inter-UE coordination scheme 1; triggering transmission of the inter-UE coordination information; transmitting the inter-UE coordination information to the second UE; and receiving a signal transmitted by the second UE based on the inter-UE coordination information, wherein the inter-UE coordination information may include information about a resource set and type information of the resource set, wherein the type information of the resource set may indicate whether the resource set is a preferred resource or a non-preferred resource.

In addition, a method of a second user equipment (UE) in a wireless communication system according to an embodiment of the disclosure may include: receiving inter-UE coordination information from a first UE; and transmitting a signal to the first UE based on the inter-UE coordination information, wherein the inter-UE coordination information may include information about a resource set and type information of the resource set, wherein the type information of the resource set may indicate whether the resource set is a preferred resource or a non-preferred resource.

**[Advantageous Effects of Invention]**

The disclosure is to propose a method for inter-UE coordination in sidelink communication and a procedure for a UE to perform resource allocation through the method. Through the proposed method, the performance of resource allocation can be improved. In addition, it can be effectively used to minimize power consumption of the UE.

**[Brief Description of Drawings]**

FIG. 1A is a diagram illustrating an example of a communication system to which an embodiment of the disclosure can be applied.

FIG. 1B is a diagram illustrating another example of a communication system to which an embodiment of the disclosure can be applied.

FIG. 1C is a diagram illustrating another example of a communication system to which an embodiment of the disclosure can be applied.

FIG. 1D is a diagram illustrating another example of a communication system to which an embodiment of the disclosure can be applied.

FIG. 2 is a diagram illustrating a method of V2X communication through a sidelink according to an embodiment of the disclosure.

FIG. 3 is a diagram explaining a resource pool defined as a set of resources on time and frequency used for sidelink transmission and reception according to an embodiment of the disclosure.

FIG. 4 is a diagram illustrating a method of allocating transmission resources in the sidelink by a base station according to an embodiment of the disclosure.

FIG. 5 is a diagram illustrating a method for a UE to directly allocate sidelink transmission resources through sensing in the sidelink according to an embodiment of the disclosure.

FIG. 6 is a diagram illustrating a mapping structure of physical channels mapped to one slot in the sidelink according to an embodiment of the disclosure.

FIG. 7 is a diagram illustrating a scenario for performing inter-UE coordination according to an embodiment of the disclosure.

FIG. 8 is a diagram illustrating two schemes of inter-UE coordination according to an embodiment of the disclosure.

FIG. 9 is a diagram illustrating a sensing window and a resource selection window when resource (re)selection is triggered for a UE performing mode 2 operation.

FIG. 10 is a diagram illustrating combining a first scheme of inter-UE coordination and a second scheme of inter-UE coordination according to an embodiment of the disclosure.

FIG. 11 is a diagram illustrating an example in which a resource set for transmission of UE-A and a resource set for transmission of UE-B are associated according to an embodiment of the present disclosure.

FIG. 12A is a diagram illustrating operations of UE-A and UE-B performing inter-UE coordination according to an embodiment of the disclosure.

FIG. 12B is a diagram illustrating an operation of a UE performing inter-UE coordination according to an embodiment of the disclosure.

FIG. 13 is a block diagram illustrating the internal structure of a UE according to an embodiment of the disclosure.

FIG. 14 is a block diagram illustrating the internal structure of a base station according to an embodiment of the disclosure.

## [Mode for the Invention]

Hereinafter, embodiments of the disclosure will be described in detail with reference to the accompanying drawings.

In the following description of embodiments, descriptions of technical details well known in the art and not directly related to the disclosure may be omitted. This is to more clearly convey the subject matter of the disclosure without obscurities by omitting unnecessary descriptions.

Likewise, in the drawings, some elements are exaggerated, omitted, or only outlined in brief. Also, the size of each element does not necessarily reflect the actual size. The same or similar reference symbols are used throughout the drawings to refer to the same or like parts.

Advantages and features of the disclosure and methods for achieving them will be apparent from the following detailed description of embodiments taken in conjunction with the accompanying drawings. However, the disclosure is not limited to the embodiments disclosed below but may be implemented in various different ways, the embodiments are provided only to complete the disclosure and to fully inform the scope of the disclosure to those skilled in the art to which the disclosure pertains, and the disclosure is defined only by the scope of the claims. The same reference symbols are used throughout the description to refer to the same parts.

Meanwhile, it will be appreciated that blocks of a flowchart and a combination of flowcharts may be executed by computer program instructions. These computer program instructions may be loaded on a processor of a general purpose computer, special purpose computer, or programmable data processing equipment, and the instructions executed by the processor of a computer or programmable data processing equipment create a means for carrying out functions described in blocks of the flowchart. To implement the functionality in a certain way, the computer program instructions may also be stored in a computer usable or readable memory that is applicable in a specialized computer or a programmable data processing equipment, and it is possible for the computer program instructions stored in a computer usable or readable memory to produce articles of manufacture that contain a means for carrying out functions described in blocks of the flowchart. As the computer program instructions may be loaded on a computer or a programmable data processing equipment, when the computer program instructions are executed as processes having a series of operations on a computer or a programmable data processing equipment, they may provide steps for executing functions described in blocks of the flowchart.

Further, each block of a flowchart may correspond to a module, a segment or a code containing one or more executable instructions for executing one or more logical functions, or to a part thereof. It should also be noted that functions described by blocks may be executed in an order different from the listed order in some alternative cases. For example, two blocks listed in sequence may be executed substantially at the same time or executed in reverse order according to the corresponding functionality.

Here, the word "unit", "module", or the like used in the embodiments may refer to a software component or a hardware component such as an FPGA or ASIC capable of carrying out a function or an operation. However, "unit" or the like is not limited to software or hardware. A unit or the like may be configured so as to reside in an addressable storage medium or to drive one or more processors. For example, units or the like may refer to components such as a software component, object-oriented software component, class component or task component, processes, functions, attributes, procedures, subroutines, program code segments, drivers, firmware, microcode, circuits, data, databases, data structures, tables, arrays, or variables. A function provided by a component and unit may be a combination of smaller components and units, and it may be combined with others to compose larger components and units. Further, components and units may be implemented to drive one or more processors in a device or a secure multimedia card. Also, in an embodiment, a "unit" or the like may include one or more processors.

In describing the embodiments of the disclosure in detail, the main focus is placed on the radio access network (new RAN (NR)) and the packet core (5G system, 5G core network, or next generation core (NG core)) being the core network according to the 5G mobile communication standards specified by 3GPP (3rd generation partnership project) being a mobile communication standardization organization, but it should be understood by those skilled in the art that the subject matter of the disclosure is applicable to other communication systems having similar technical backgrounds without significant modifications departing from the scope of the disclosure.

In the 5G system, to support network automation, a network data collection and analysis function (NWDAF), which is a network function (NF) that provides a function to analyze and provide data collected from a 5G network, can be defined. The NWDAF can collect/store/analyze information from the 5G network and provide results to unspecified NFs, and the analysis results can be used independently by each NF.

For convenience of description, some terms and names defined in 3GPP standards (standards of 5G, NR, LTE, or similar systems) may be used. However, the disclosure is not limited by these terms and names, and may be equally applied to systems conforming to other standards.

Also, those terms used in the following description for identifying an access node, indicating a network entity, indicating a message, indicating an interface between network entities, and indicating various identification information are taken as illustration for ease of description. Accordingly, the disclosure is not limited by the terms used herein, and other terms referring to objects having an equivalent technical meaning may be used.

To meet the increasing demand for wireless data traffic since the commercialization of 4G communications systems, efforts are being made to develop improved 5G communication systems (New Radio, NR). To achieve high data rates, 5G communication systems are designed to support extremely high frequency (mmWave) bands (e.g., 28 GHz frequency band). To decrease path loss of radio waves and increase the transmission distance in the mmWave band, various technologies including beamforming, massive multiple-input multiple-output (massive MIMO), full dimensional MIMO (FD-MIMO), array antennas, analog beamforming, and large scale antennas are considered for 5G communication systems. Also, in 5G communication systems, unlike LTE, various subcarrier spacings (SCS) including 15 kHz, 30 kHz, 60 kHz, and 120 kHz are supported, polar coding is applied to the physical control channel, and low density parity check (LDPC) is applied to the physical data channel. Additionally, not only DFT-s-OFDM but also CP-OFDM are used as a waveform for uplink transmission. While LTE supports HARQ (Hybrid ARQ) retransmission in units of transport blocks (TBs), the 5G communication system can additionally support HARQ retransmission based on a code block group (CBG) in which several code blocks (CBs) are bundled.

Further, to improve system networks in 5G communication systems, technology development is under way regarding evolved small cells, advanced small cells, cloud radio access networks (cloud RANs), ultra-dense networks, device-to-device (D2D) communication, wireless backhaul, moving networks, cooperative communication, coordinated multi-points (CoMP) communication, interference cancellation, and the like.

Meanwhile, the Internet is evolving from a human centered network where humans create and consume information into the Internet of Things (IoT) where distributed elements such as things exchange and process information. There has also emerged the Internet of Everything (IoE) technology that combines IoT technology with big data processing technology through connection with cloud servers. To realize IoT, technology elements related to sensing, wired/wireless communication and network infrastructure, service interfacing, and security are needed, and technologies interconnecting things such as sensor networks, machine-to-machine (M2M) or machine type communication (MTC) are under research in recent years. In IoT environments, it is possible to provide intelligent Internet technology services, which collect and analyze data created by interconnected things to add new values to human life. Through convergence and combination between existing information technologies and various industries, IoT technology may be applied to various areas such as smart homes, smart buildings, smart cities, smart or connected cars, smart grids, health-care, smart consumer electronics, and advanced medical care.

Accordingly, various attempts are being made to apply 5G communication systems to IoT networks. For example, technologies such as sensor networks and machine-to-machine (M2M) or machine type communication (MTC) are being realized by use of 5G communication technologies including beamforming, MIMO, and array antennas. Application of cloud RANs as a big data processing technique described above may be an instance of convergence of 5G technology and IoT technology. In this way, a plurality of services may be provided to the user in a communication system, and to provide such a plurality of services to the user, a method that can provide individual services within the same time interval according to their characteristics and an apparatus using the same are required. Various services provided in the 5G communication system are being investigated, and one of them is a service that satisfies the requirements of low latency and high reliability. Particularly in the case of vehicle communication, the NR V2X system supports unicast communication between UEs, groupcast (or multicast) communication, and broadcast communication. Further, unlike LTE V2X which aims to transmit and receive basic safety information necessary for the vehicle to drive on the road, NR V2X aims to provide more advanced services such as platooning, advanced driving, extended sensor, and remote driving.

In particular, inter-UE coordination may be considered in the sidelink. Here, inter-UE coordination may mean providing a more advanced sidelink service by sharing information that can be helpful between UEs. In the disclosure, information shared for inter-UE coordination is not limited to specific information. Resource allocation information may be included as such information. In general, a UE performing transmission on the sidelink may allocate resources through a direct sensing and resource selection procedure (mode 2), or may be allocated resources from a base station when the UE performing transmission is within the coverage of the base station (mode 1). However, a method in which a UE is allocated a resource and receives resource allocation-related information from another UE may be additionally considered through inter-UE coordination. The method of being allocated resources and receiving information related to resource allocation from another UE through inter-UE coordination may have the following advantages. First, there are cases in which it is more advantageous to be allocated resources from another UE. For example, considering a groupcast scenario, it may be advantageous for groupcast operation that a leader UE of the group directly controls resource allocation of other UEs belonging to the group to thereby allocate resources and provide resource allocation-related information to other UEs belonging to the group. In addition, when the transmitting UE is located outside the base station coverage and the receiving UE is located within the base station coverage, under the assumption that the base station can better allocate resources to sidelink UEs by receiving information related to resource allocation from UEs, it is possible to consider a method in which a UE within the base station coverage receives resource allocation information from the base station and delivers it to another UE outside the base station coverage. In addition, compared to a method in which the transmitting UE allocates resources through a direct sensing and resource selection procedure, a method in which the receiving UE notifies the transmitting UE of the resource allocation position that the receiving UE wants to receive from the transmitting UE through a direct sensing and resource selection procedure may provide improved resource allocation performance by solving the hidden node, exposed node, and half duplex issues. As a second reason why it may be more advantageous to be allocated resources from another UE, if the transmitting UE is a UE that requires low power consumption, such as a mobile UE, power consumption of the transmitting UE can be minimized when another UE performs resource allocation for the transmitting UE. Note that a lot of power may be consumed when a UE performs sensing to select a sidelink transmission resource. Hence, operations of the UE and the base station for sharing resource allocation related information through inter-UE coordination should be defined in consideration of these advantages. Accordingly, for inter-UE coordination, the disclosure proposes detailed methods for determining the UE to perform a corresponding operation, determining the required information, and indicating resource allocation information.

Embodiments of the present specification are proposed to support the above-described scenario, and in particular, aim to provide a scheme for performing inter-UE coordination in the sidelink, and a method and apparatus for providing resource allocation-related information through the scheme.

Embodiments of the present specification are proposed to support the above-described scenario, and in particular, aim to provide a method and apparatus for performing DRX in the sidelink.

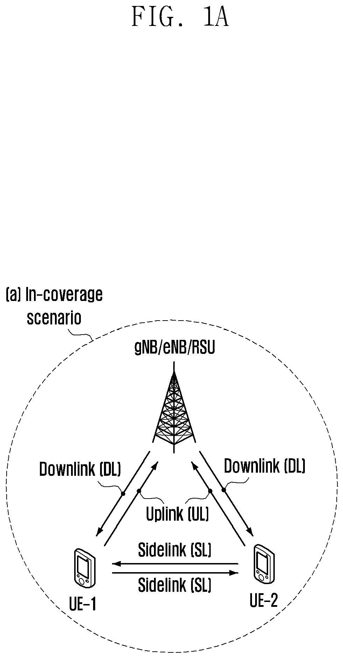

FIGS. 1A to 1D are diagrams illustrating a communication system to which an embodiment of the disclosure can be applied.

FIG. 1A illustrates a case where all V2X UEs (UE-1 and UE-2) are located within the coverage of the base station (in-coverage, IC). All V2X UEs may receive data and control information through a downlink (DL) from the base station, or transmit data and control information through an uplink (UL) to the base station. Here, the data and control information may be data and control information for V2X communication. Or, the data and control information may be data and control information for regular cellular communication. In addition, the V2X UEs may transmit and receive data and control information for V2X communication through a sidelink (SL).

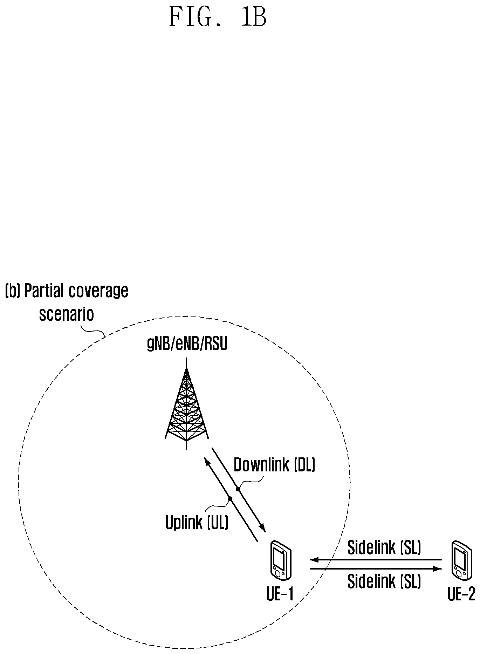

FIG. 1B illustrates a case where UE-1 among V2X UEs is located within the coverage of the base station and UE-2 is located outside the coverage of the base station. That is, FIG. 1B shows an example of partial coverage (PC) where a specific V2X UE (UE-2) is located outside the coverage of the base station. V2X UE (UE-1) located within the coverage of the base station may receive data and control information through the downlink from the base station, or may transmit data and control information to the base station through the uplink. V2X UE (UE-2) located outside the coverage of the base station cannot receive data and control information from the base station through the downlink, and cannot transmit data and control information to the base station through the uplink. V2X UE (UE-2) may transmit and receive data and control information for V2X communication through a sidelink to and from V2X UE (UE-1).

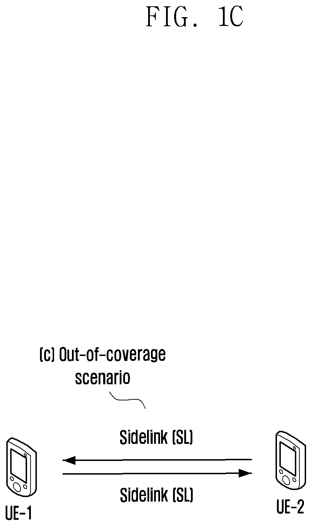

FIG. 1C illustrates a case where all V2X UEs are located outside the coverage of the base station (out-of coverage, OOC). Hence, V2X UEs (UE-1, UE-2) cannot receive data and control information from the base station through the downlink, and cannot transmit data and control information to the base station through the uplink. V2X UEs (UE-1, UE-2) may transmit and receive data and control information for V2X communication through the sidelink.

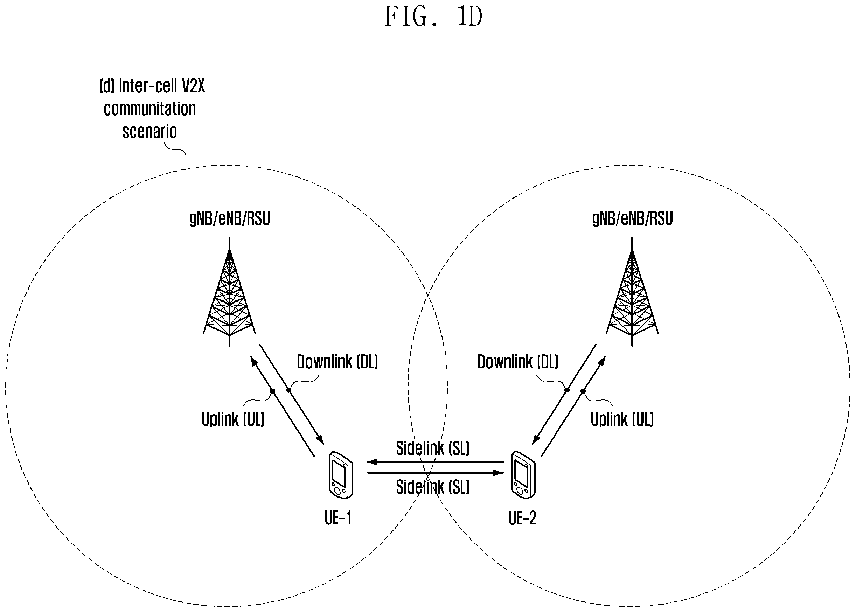

FIG. 1D illustrates a scenario where V2X UEs (UE-1, UE-2) located in different cells perform V2X communication. Specifically, FIG. 1D illustrates a case where V2X UEs (UE-1, UE-2) are connected to different base stations (RRC connected state) or are camping thereon (RRC connection released state, i.e., RRC idle state). Here, V2X UE (UE-1) may be a V2X transmitting UE, and V2X UE (UE-2) may be a V2X receiving UE. Alternatively, V2X UE (UE-1) may be a V2X receiving UE, and V2X UE (UE-2) may be a V2X transmitting UE. V2X UE (UE-1) may receive a system information block (SIB) from the base station to which it is connected (or, on which it is camping), and V2X UE (UE-2) may receive a SIB from another base station to which it is connected (or, on which it is camping). Here, for the SIB, an existing SIB or a SIB defined specifically for V2X may be used. Further, the information of the SIB received by V2X UE (UE-1) and the information of the SIB received by V2X UE (UE-2) may be different from each other. Hence, for V2X communication between UEs (UE-1, UE-2) located in different cells, information may need to be standardized, or a scheme for interpreting SIB information received from another cell may be additionally required along with information signaling.

For convenience of description, FIG. 1 illustrates a V2X system composed of two V2X UEs (UE-1, UE-2), but communication between more V2X UEs may be made without being limited thereto. In addition, the interface (uplink and downlink) between the base station and the V2X UE may be referred to as a Uu interface, and the sidelink between the V2X UEs may be referred to as a PC5 interface. Hence, these may be used interchangeably in the disclosure. Meanwhile, in the disclosure, the UE may refer to a vehicle supporting vehicle-to-vehicle (V2V) communication, a vehicle or pedestrian handset (e.g., smartphone) supporting vehicle-to-pedestrian (V2P) communication, a vehicle supporting vehicle-to-network (V2N) communication, or a vehicle supporting vehicle-to-infrastructure (V2I) communication. Also, in the disclosure, the UE may refer to a road side unit (RSU) equipped with a UE function, an RSU equipped with a base station function, or an RSU equipped with some of a base station function and some of a UE function.

In addition, according to an embodiment of the disclosure, the base station may be a base station supporting both V2X communication and regular cellular communication or a base station supporting only V2X communication. Here, the base station may be a 5G base station (gNB), a 4G base station (eNB), or an RSU. Hence, in the disclosure, the base station may be referred to as an RSU.

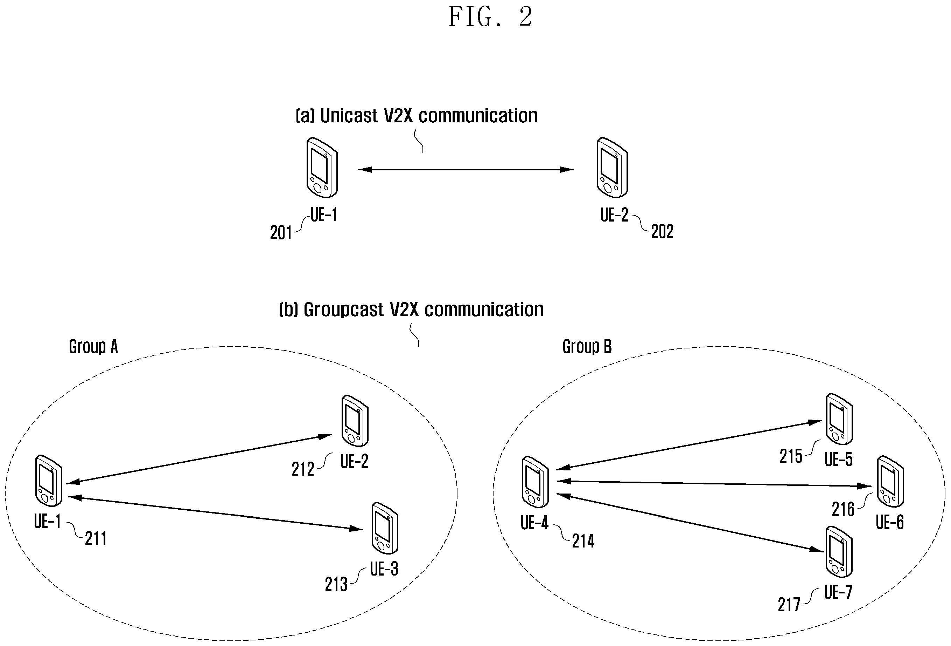

FIG. 2 is a diagram illustrating a method of V2X communication through a sidelink according to an embodiment of the disclosure.

With reference to part (a) of FIG. 2, UE-1 201 (e.g., TX UE) and UE-2 202 (e.g., RX UE) may perform communication in a one-to-one way, which may be referred to as unicast communication.

With reference to part (b) of FIG. 2, the TX UE and the RX UEs may perform communication in a one-to-many way, which may be referred to as groupcast or multicast. In part (b) of FIG. 2, UE-1 211, UE-2 212, and UE-3 213 form one group (group A) to perform groupcast communication, and UE-4 214, UE-5 215, UE-6 216, and UE-7 217 form another group (group B) to perform groupcast communication. Each UE may perform groupcast communication only within the group to which it belongs, and communication between different groups may be performed through unicast, groupcast, or broadcast. Part (b) of FIG. 2 illustrates formation of two groups (group A, group B) without being limited thereto.

Meanwhile, although not shown in FIG. 2, V2X UEs can perform broadcast communication. Broadcast communication means a case where all V2X UEs receive data and control information transmitted through the sidelink by a V2X TX UE. For example, assuming in part (b) of FIG. 2 that UE-1 211 is a TX UE for broadcasting, all UEs (UE-2 212, UE-3 213, UE-4 214, UE-5 215, UE-6 216, UE-7 217) may receive data and control information transmitted by UE-1 211.

In NR V2X, unlike LTE V2X, it is possible to consider both support in the form where a vehicle UE transmits data to only one specific node through unicast, and support in the form where a vehicle UE transmits data to multiple specified nodes through groupcast. For example, in a service scenario such as platooning, which is a technology that connects two or more vehicles in a single network to move them together in a cluster, these unicast and groupcast may be valuably used. Specifically, unicast communication may be required for the purpose of controlling one specific node by the leader node of the group connected through platooning, and groupcast communication may be required for the purpose of simultaneously controlling the group composed of multiple specified nodes.

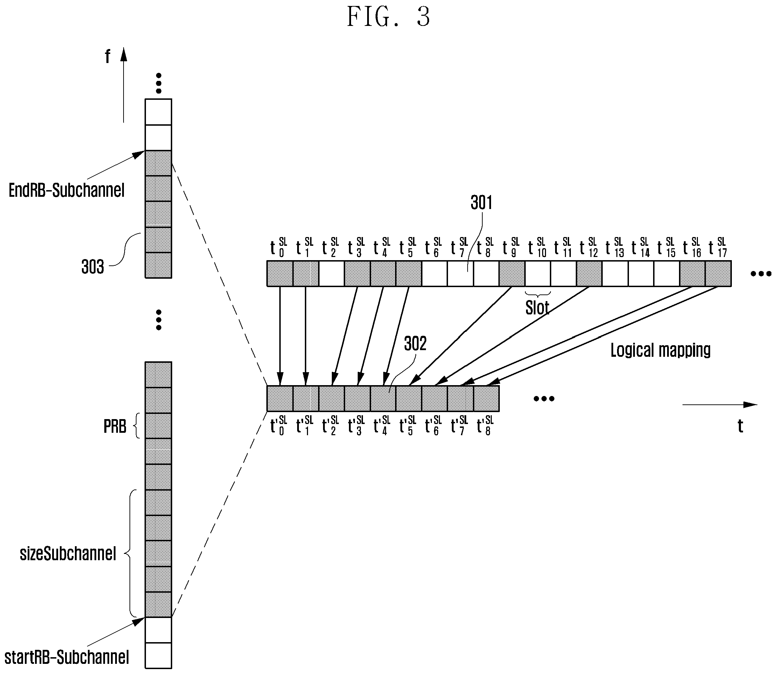

FIG. 3 is a diagram illustrating a resource pool defined as a set of resources in the time and frequency domain used for sidelink transmission and reception according to an embodiment of the disclosure. In the resource pool, the unit of resource allocation (resource granularity) in the time domain may be a slot. In addition, the resource allocation unit in the frequency domain may be a sub-channel composed of one or more physical resource blocks (PRBs). In the disclosure, a case in which a resource pool is non-contiguously allocated in the time domain is described for illustration, but a resource pool may be contiguously allocated in the time domain. Further, in the disclosure, a case in which a resource pool is contiguously allocated in the frequency domain is described for illustration, but it does not exclude a case in which a resource pool is non-contiguously allocated in the frequency domain.

With reference to FIG. 3, a case 301 in which a resource pool is non-contiguously allocated in the time domain is illustrated. FIG. 3 illustrates a case in which the granularity of time domain resource allocation is a slot. First, a sidelink slot may be defined within a slot used for uplink. Specifically, the length of a symbol used for sidelink within one slot may be set by sidelink bandwidth part (BWP) information. Hence, among slots used for uplink, slots for which the length of a symbol set for sidelink is not guaranteed cannot be a sidelink slot. Also, a slot in which a sidelink synchronization signal block (S-SSB) is transmitted is excluded from slots belonging to the resource pool. Referring to portion 301, except for such slots, a set of slots that can be used for sidelink in the time domain are represented as ($t_0^{SL}$, $t_1^{SL}$, $t_2^{SL}$, $\cdots$). In portion 301, a shaded slot indicates a slot belonging to the resource pool. Sidelink slots belonging to the resource pool may be (pre-)configured as resource pool information through a bitmap. Referring to portion 302, a set of sidelink slots belonging to the resource pool in the time domain are represented as ($t_0'^{SL}$, $t_1'^{SL}$, $t_2'^{SL}$, $\cdots$). In the disclosure, the meaning of (pre-)configuration may mean configuration information that is preconfigured and pre-stored in a UE, or may mean a case where a UE is configured with configuration information in a cell-common way by a base station. Here, "cell-common" may mean that UEs in a cell receive the same configuration information from the base station. Here, a method in which the UE obtains cell-common information by receiving a sidelink system information block (SL-SIB) from the base station may be considered. It may also mean a case where the UE is configured in a UE-specific manner after the RRC connection with the base station is established. Here, "UE-specific" may be replaced with the term "UE-dedicated", and may mean that configuration information is received with a specific value for each UE. Here, a method in which the UE obtains UE-specific information by receiving an RRC message from the base station may be considered. In addition, (pre-)configuration can be considered in a method of being configured as resource pool information or in a method of not being configured as resource pool information. In the case of (pre-)configuration as resource pool information, all UEs operating on the resource pool are configured with common configuration information, except for a case where a UE is configured in a UE-specific way after RRC connection setup with the base station. However, (pre-)configuration as not being resource pool information is basically independent of resource pool configuration information. For example, one or more modes (e.g., A, B and C) may be (pre-)configured on the resource pool, and information (pre-)configured independently of the resource pool configuration information may indicate which mode (e.g., A, B or C) to be used among the (pre-)configured modes of the resource pool.

Referring to portion 303 in FIG. 3, a resource pool is contiguously allocated in the frequency domain. Frequency domain resource allocation may be configured as sidelink bandwidth part (BWP) information and may be performed in units of sub-channels. The sub-channel may be defined as a resource allocation unit composed of one or more physical resource blocks (PRBs) in the frequency domain. That is, the sub-channel may be defined as an integer multiple of PRB. Referring to portion 303, the sub-channel may be composed of five consecutive PRBs, and the sub-channel size (sizeSubchannel) may be the size of five consecutive PRBs. However, the details shown in the drawing are only an example of the disclosure; the size of a sub-channel may be set differently, and it is common that one sub-channel is composed of consecutive PRBs, but it is not necessarily composed of consecutive PRBs. The sub-channel may be a basic unit of resource allocation for the PSSCH. In portion 303, startRB-Subchannel may indicate the start position of the sub-channel in the frequency domain of the resource pool. When frequency domain resource allocation is performed in units of sub-channels, frequency domain resources may be allocated by using configuration information related to the resource block (RB) index where the sub-channel starts (startRB-Subchannel), information on the number of PRBs constituting the sub-channel (sizeSubchannel), and a total number of sub-channels (numSubchannel). Here, the information regarding startRB-Subchannel, sizeSubchannel, and numSubchannel may be (pre-)configured as frequency domain resource pool information.

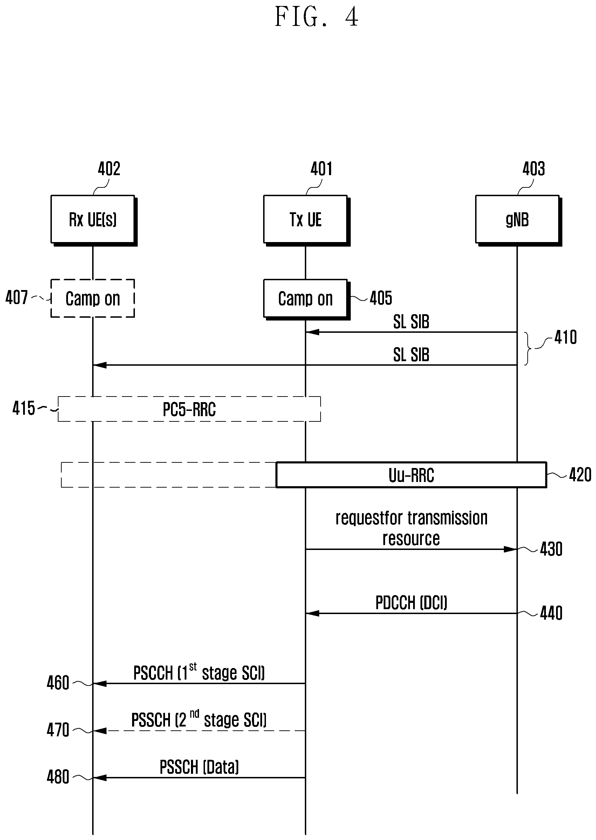

FIG. 4 is a diagram illustrating a method of allocating transmission resources in the sidelink by a base station according to an embodiment of the disclosure.

The method for the base station to allocate transmission resources in the sidelink will be referred to as mode 1 hereinafter. Mode 1 may be scheduled resource allocation. Mode 1 may indicate a method in which the base station allocates resources used for sidelink transmission to RRC-connected UEs in a dedicated scheduling scheme. The mode 1 method can be effective for interference management and resource pool management because the base station can manage sidelink resources.

With reference to FIG. 4, a TX UE 401 may camp on a base station (cell) 403 (405). "Camp on" may mean, for example, a state in which a UE in idle state (RRC_IDLE) can select (or reselect) a base station (cell) as needed and receive system information or paging information.

Meanwhile, when a RX UE 402 is located within the coverage of the base station (cell) 403, the RX UE 402 may camp on the base station (cell) 403 (407). Otherwise, when the RX UE 402 is located outside the coverage of the base station (cell) 403, the RX UE 402 may not camp on the base station (cell) 403.

In the disclosure, the RX UE 402 represents a UE that receives data transmitted by the TX UE 401.

The TX UE 401 and the RX UE 402 may receive a sidelink system information block (SL-SIB) from the base station 403 (410). The SL-SIB information may include sidelink resource pool information for sidelink transmission and reception, parameter setting information for sensing operation, information for setting sidelink synchronization, or information about carriers for sidelink transmission and reception operating at different frequencies.

When data traffic for V2X is generated in the TX UE 401, the TX UE 401 may be RRC-connected to the base station 403 (420). Here, the RRC connection between the UE and the base station may be referred to as Uu-RRC. The Uu-RRC connection process (420) may be performed before generation of data traffic in the TX UE 401. Also, in mode 1, in a state where the Uu-RRC connection process (420) between the base station 403 and the RX UE 402 has been performed, the TX UE may perform transmission to the RX UE through the sidelink. Unlike this, in mode 1, even when the Uu-RRC connection process (420) between the base station 403 and the RX UE 402 is not performed, the TX UE may perform transmission to the RX UE through the sidelink.

The TX UE 401 may request a transmission resource from the base station to perform V2X communication with the RX UE 402 (430). Here, the TX UE 401 may request a sidelink transmission resource from the base station 403 by using the physical uplink control channel (PUCCH), an RRC message, or a medium access control (MAC) control element (CE). Meanwhile, the MAC CE may be a buffer status report (BSR) MAC CE in a new format (including at least an indicator indicating a buffer status report for V2X communication and information about the size of data buffered for D2D communication). Further, the TX UE 401 may request a sidelink resource through scheduling request (SR) bits transmitted on the physical uplink control channel.

Then, the base station 403 may allocate a V2X transmission resource to the TX UE 401. Here, the base station may allocate transmission resources by using a dynamic grant scheme or a configured grant scheme.

First, in the case of the dynamic grant scheme, the base station may allocate resources for TB transmission through downlink control information (DCI). The sidelink scheduling information included in the DCI may include parameters related to transmission occasions for initial transmission and retransmission, and frequency allocation location information. The DCI for the dynamic grant scheme may have a CRC scrambled with SL-V-RNTI to indicate the dynamic grant scheme.

Next, in the case of the configured grant scheme, the base station may periodically allocate resources for TB transmission by setting a semi-persistent scheduling (SPS) interval through Uu-RRC. In this case, the base station may allocate resources for one TB through the DCI. The sidelink scheduling information for one TB included in the DCI may include parameters related to transmission occasions for initial transmission and retransmission resources, and frequency allocation location information. When resources are allocated in the configured grant scheme, the transmission occasion and frequency allocation location of the initial transmission and retransmission for one TB may be determined by the DCI, and the resource for the next TB may be repeated at SPS intervals. The DCI for the configured grant scheme may have a CRC scrambled with SL-SPS-V-RNTI to indicate the configured grant scheme. In addition, the configured grant (CG) scheme can be divided into type1 CG and type2 CG. In the case of type2 CG, it is possible to activate or deactivate a resource configured by the configured grant through the DCI.

Hence, in the case of mode 1, the base station 403 may notify the TX UE 401 of scheduling for sidelink communication with the RX UE 402 by transmitting the DCI on the physical downlink control channel (PDCCH) (440).

Specifically, downlink control information (DCI) used by the base station 403 for sidelink communication with the TX UE 401 may be DCI format 3_0 or DCI format 3_1. DCI format 3_0 may be defined as DCI for NR sidelink scheduling in one cell, and DCI format 3_1 may be defined as DCI for LTE sidelink scheduling in one cell.

In the case of broadcast transmission, the TX UE 401 may perform transmission without RRC setting for the sidelink (415). Contrary to this, in the case of unicast or groupcast transmission, the TX UE 401 may establish an RRC connection to another UE on a one-to-one basis. Here, the RRC connection between UEs may be referred to as PC5-RRC (415) in distinction from Uu-RRC. In the case of group cast, PC5-RRC (415) may be individually made between UEs in the group. In FIG. 4, PC5-RRC connection (415) is shown as an operation after SL-SIB transmission (410), but it may be performed at any time before SL-SIB transmission (410) or before SCI transmission.

Then, the TX UE 401 may transmit SCI (1$^{st}$-stage) to the RX UE 402 through the physical sidelink control channel (PSCCH) (460). Also, the TX UE 401 may transmit SCI (2$^{nd}$-stage) to the RX UE 402 through the PSSCH (470). Here, information related to resource allocation may be included in the 1$^{st}$-stage SCI, and other control information may be included in the 2$^{nd}$-stage SCI. Further, the TX UE 401 may transmit data to the RX UE 402 through the PSSCH (480). In this case, SCI (1$^{st}$-stage), SCI (2$^{nd}$-stage), and PSSCH may be transmitted together in the same slot.

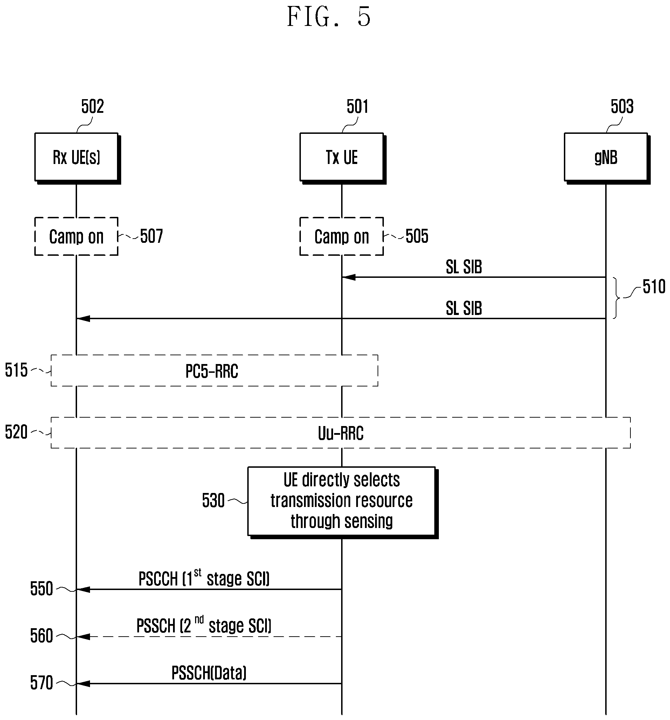

FIG. 5 is a diagram illustrating a method for a UE to directly allocate sidelink transmission resources through sensing in the sidelink according to an embodiment of the disclosure.

Hereinafter, a method in which the UE directly allocates a sidelink transmission resource through sensing in the sidelink will be referred to as mode 2. Mode 2 may also be referred to as UE autonomous resource selection. In mode 2, the base station 503 may provide a sidelink transmission/reception resource pool for V2X as system information, and the TX UE 501 may select a transmission resource according to a specified rule. Compared to mode 1 in which the base station is directly involved in resource allocation, in FIG. 5, there is a difference in that the TX UE 501 autonomously selects a resource and transmits data based on a resource pool received in advance through system information.

With reference to FIG. 5, a TX UE 501 may camp on a base station (cell) 503 (505). "Camp on" may mean, for example, a state in which a UE in idle state (RRC_IDLE) can select (or reselect) a base station (cell) as needed and receive system information or paging information. Also, with reference to FIG. 5, unlike FIG. 4 described above, in the case of mode 2, when the TX UE 501 is located within the coverage of the base station (cell) 503, the TX UE 501 may camp on the base station (cell) 503 (507). Otherwise, when the TX UE 501 is located outside the coverage of the base station (cell) 503, the TX UE 501 may not camp on the base station (cell) 503.

Meanwhile, when a RX UE 502 is located within the coverage of the base station (cell) 503, the RX UE 502 may camp on the base station (cell) 503 (507). Otherwise, when the RX UE 502 is located outside the coverage of the base station (cell) 503, the RX UE 502 may not camp on the base station (cell) 503.

In the disclosure, the RX UE 502 represents a UE that receives data transmitted by the TX UE 501.

The TX UE 501 and the RX UE 502 may receive a sidelink system information block (SL-SIB) from the base station 503 (510). The SL-SIB information may include sidelink resource pool information for sidelink transmission and reception, parameter setting information for sensing operation, information for setting sidelink synchronization, or information about carriers for sidelink transmission and reception operating at different frequencies.

The difference between FIG. 4 and FIG. 5 is that whereas the base station 503 and the UE 501 operate in RRC connected state in FIG. 4, the UE may operate even in idle mode (520) (the state in which RRC connection is not established) in FIG. 5. Also, even in RRC connected state (520), the base station 503 may allow the TX UE 501 to autonomously select a transmission resource without directly participating in resource allocation. Here, the RRC connection between the UE 501 and the base station 503 may be referred to as Uu-RRC (520). When data traffic for V2X is generated in the TX UE 501, the TX UE 501 may be configured with a resource pool through system information received from the base station 503, and the TX UE 501 may directly select time/frequency domain resources from the configured resource pool through sensing (530). When a resource is finally selected, the selected resource is determined as a grant for sidelink transmission.

In the case of broadcast transmission, the TX UE 501 may perform transmission without RRC setting for the sidelink (515). Contrary to this, in the case of unicast or groupcast transmission, the TX UE 501 may establish an RRC connection to another UE on a one-to-one basis. Here, the RRC connection between UEs may be referred to as PC5-RRC (515) in distinction from Uu-RRC. In the case of group cast, PC5-RRC (515) may be individually made between UEs in the group. In FIG. 5, PC5-RRC connection (515) is shown as an operation after SL-SIB transmission (510), but it may be performed at any time before SL-SIB transmission (510) or before SCI transmission.

Then, the TX UE 501 may transmit SCI (1st-stage) to the RX UE 502 through the PSCCH (550). Also, the TX UE 501 may transmit SCI (2nd-stage) to the RX UE 502 through the PSSCH (560). Here, information related to resource allocation may be included in the 1st-stage SCI, and other control information may be included in the 2nd-stage SCI. Further, the TX UE 501 may transmit data to the RX UE 502 through the PSSCH (570). In this case, SCI (1st-stage), SCI (2nd-stage), and PSSCH may be transmitted together in the same slot.

Specifically, downlink control information (SCI) used by the TX UE 401 or 501 for sidelink communication with the RX UE 402 or 502 may be SCI format 1-A as 1st-stage SCI. Additionally, there may be SCI format 2-A or SCI format 2-B as 2nd-stage SCI. In SCI (2nd-stage), SCI format 2-A may be used by including information for PSSCH decoding when HARQ feedback is not used or when HARQ feedback is used and both ACK and NACK information is included. On the other hand, SCI format 2-B may be used by including information for PSSCH decoding when HARQ feedback is not used or when HARQ feedback is used and only NACK information is included. For example, SCI format 2-B may be used only for groupcast transmission.

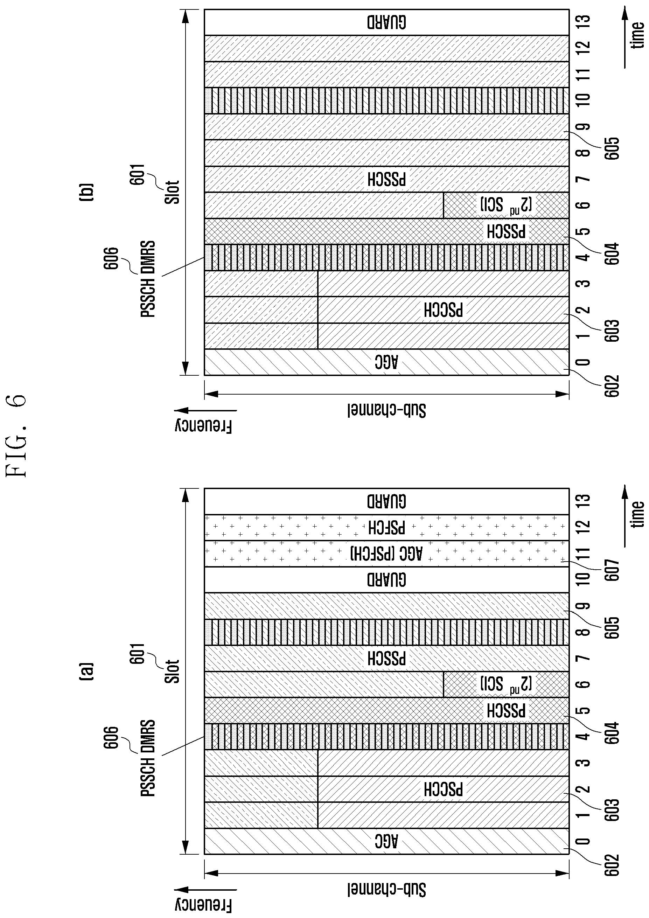

FIG. 6 is a diagram illustrating a mapping structure of physical channels mapped to one slot in the sidelink according to an embodiment of the disclosure.

Specifically, the mapping for PSCCH/PSSCH/PSFCH physical channels is shown in FIG. 6. In the case of PSFCH, when sidelink HARQ feedback is activated in a higher layer, time domain resources of PSFCH may be (pre-)configured as resource pool information. Here, the time domain resource on which the PSFCH is transmitted may be (pre-)configured with a value of one of every 0, 1, 2, and 4 slots. Here, '0' means that no PSFCH resource is used. Further, '1', '2' and '4' may mean that a PSFCH resource is for every 1, 2, and 4 slots, respectively. Part (a) of FIG. 6 illustrates the structure of a slot in which PSFCH resources are not configured, and part (b) of FIG. 6 illustrates the structure of a slot in which PSFCH resources are configured. PSCCH/PSSCH/PSFCH may be allocated to one or more sub-channels in the frequency domain. For details on sub-channel allocation, refer to the description of FIG. 3. Next, to describe the time domain mapping of PSCCH/PSSCH/PSFCH with reference to FIG. 6, one or more symbols before the TX UE transmits PSCCH/PSSCH/PSFCH in the corresponding slot 601 may be used as a region 602 for AGC. When the corresponding symbol(s) is used for AGC, it may be considered to repeatedly transmit a signal of another channel in the corresponding symbol region. In this case, some of PSCCH or PSSCH symbols may be considered a repeated signal of another channel. Alternatively, a preamble may be transmitted in the AGC region. When a preamble signal is transmitted, there is an advantage that the AGC execution time can be further shortened compared to repeatedly transmitting a signal of another channel. When a preamble signal is transmitted for AGC, a specific sequence may be used as the preamble signal 602, where a sequence such as PSSCH DMRS, PSCCH DMRS, and CSI-RS may be used as a preamble. The sequence used as a preamble in the disclosure is not limited to those described above. Additionally, according to FIG. 6, control information related to resource allocation may as 1st-stage sidelink control information (SCI) be transmitted on PSCCH 603 corresponding to the leading symbols of the slot, and other control information may as 2nd-stage SCI be transmitted over PSSCH region 604. Data scheduled by control information may be transmitted on PSSCH 605. In this case, the position in time at which the 2nd-stage SCI is transmitted may be mapped from the symbol through which the first PSSCH DMRS 606 is transmitted. The position in time at which the PSSCH DMRS 606 is transmitted may be different between a slot in which the PSFCH is transmitted and a slot in which the PSFCH is not transmitted, as shown in part (a) and part (b) of FIG. 6. Part (a) of FIG. 6 shows that physical sidelink feedback channel (PSFCH) 607, which is a physical channel for transmitting feedback information, is located in the last portion of the slot. By securing a specific empty interval (guard) between PSSCH 605 and PSFCH 607, the UE that has transmitted or received PSSCH 605 can prepare to transmit or receive PSFCH 607. Further, after transmitting or receiving PSFCH 607, an empty interval (guard) may be secured for a specific time.

The following embodiments are intended to propose a procedure for a UE to perform resource selection in the sidelink in consideration of inter-UE coordination. First, as a first embodiment, an overall procedure for how and when inter-UE coordination can be performed in the sidelink is described. A second embodiment proposes methods for performing inter-UE coordination. A third embodiment describes detailed operations of a UE providing coordination information in a first method of inter-UE coordination. A fourth embodiment describes detailed operations of a UE providing coordination information in a second method of inter-UE coordination. A fifth embodiment describes operations of a UE receiving inter-UE coordination information. And, a sixth embodiment describes overall operations of the UE providing coordination information and the UE receiving coordination information to perform inter-UE coordination. Note that the following embodiments of the disclosure may be used in combination with each other.

<First Embodiment>

In the first embodiment, a specific scenario for inter-UE coordination in sidelink is presented through a drawing. And, the overall procedure for how and when inter-UE coordination can be performed is described. Here, the UE may be a vehicle UE or a pedestrian UE.

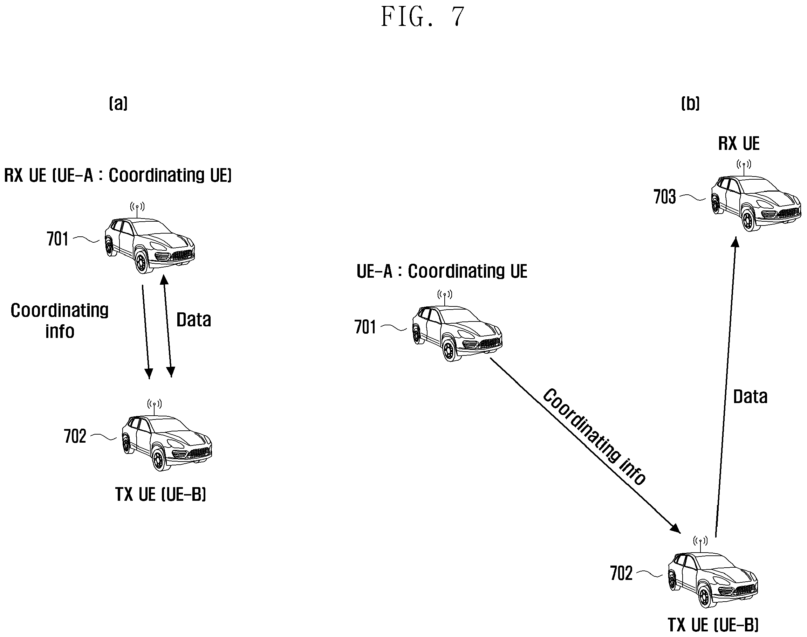

FIG. 7 is a diagram illustrating a scenario for performing inter-UE coordination according to an embodiment of the disclosure. Here, inter-UE coordination may mean providing an enhanced sidelink service by sharing information that can be helpful between UEs. In the disclosure, information shared for inter-UE coordination is not limited to specific information. As an example, resource allocation information may be included as information shared for inter-UE coordination. In general, a TX UE may allocate resources in the sidelink through a direct sensing and resource selection procedure (mode 2), or a TX UE may be allocated resources from a base station when it is within the coverage of the base station (mode 1). However, it is possible to consider a method in which a UE is allocated resources and receives information related to resource allocation from another UE through inter-UE coordination. It has been described above that a situation in which such inter-UE coordination is helpful may occur. In the following embodiments including the first embodiment, resource allocation related information is described as an example, but the contents disclosed in each embodiment can be applied to any information that can be shared for inter-UE coordination.

Referring to FIG. 7, a scenario in which inter-UE coordination is performed in the sidelink is illustrated. In FIG. 7, UE-A 701 corresponds to a UE that provides resource allocation related information to UE-B 702, and UE-B 702 corresponds to a UE that receives resource allocation related information from UE-A 701 to perform sidelink transmission. An example in part (a) of FIG. 7 illustrates a case where UE-A 701 providing resource allocation related information corresponds to a UE that receives sidelink transmission transmitted by UE-B 702. Unlike this, as shown in part (b) of FIG. 7, a UE other than the UE that receives sidelink transmission transmitted by UE-B 702 may also become UE-A 701 that supplies resource allocation related information. Specifically, the example in part (b) of FIG. 7 illustrates a case where UE-A 701 is not the same as RX UE 703 as to UE-B 702. Through inter-UE coordination, UE-B can receive resource allocation-related information from UE-A, which can facilitate sidelink transmission. In the disclosure, a UE providing relevant information for inter-UE coordination is referred to as UE-A, and a UE receiving relevant information for inter-UE coordination is referred to as UE-B. For resource allocation related information that can be provided from UE-A to UE-B and detailed operations of UE-A for this, refer to the second to fourth embodiments below. For a method in which UE-B receives resource allocation-related information from UE-A and utilizes it, refer to the fifth embodiment below.

As shown in FIG. 7, in the sidelink, certain UE(s) may be a UE providing resource allocation information, such as UE-A, or a UE receiving resource allocation information, such as UE-B. Also, note that not all UEs need to be a UE that provides resource allocation information, such as UE-A, or a UE that receives resource allocation information, such as UE-B. Specifically, one or more UEs may have the capacity for acting as UE-A (or UE-B). However, not all UEs having the capacity for performing the role of UE-A (or UE-B) need to be UE-A (or UE-B). Hence, UE-A (or UE-B) may be selected as needed. In other words, a UE may not play the role of UE-A (or UE-B) and then may play the role of UE-A (or UE-B); conversely, a UE may play the role of UE-A (or UE-B) and then may not play the role of UE-A (or UE-B). Therefore, in the following embodiment, when inter-UE coordination is performed in the sidelink, conditions under which a UE can become UE-A and conditions under which a UE can become UE-B are presented. First, at least one of the following conditions may be included as a condition for a specific UE to become UE-A. In the disclosure, the conditions for a UE to become UE-A during inter-UE coordination are not limited to the following ones.

Conditions for becoming UE-A during inter-UE coordination

    * Condition 1: a UE has a capability to perform inter-UE coordination.

** In condition 1 above, the corresponding capability may mean a capability of providing relevant information to another UE during inter-UE coordination. In addition, the UE having the corresponding capability may report the corresponding capability to the base station (BS) or another UE. For example, as described with reference to FIG. 7, additional UE processing may be required for the UE to provide resource allocation-related information to another UE through inter-UE coordination. Hence, the UE may perform an operation of reporting the UE capability regarding whether inter-UE coordination can be supported to the base station through Uu-RRC or to another UE through PC5-RRC. Thereby, the base station may determine whether inter-UE coordination is possible by identifying the capability of the corresponding UE. Further, through this, a UE may determine whether inter-UE coordination with another UE is possible by identifying the capability of the other UE, and may determine whether to request resource allocation-related information from the corresponding UE.

* Condition 2: inter-UE coordination is enabled in a UE.

** As to condition 2 above, whether inter-UE coordination is enabled/disabled can be (pre-)configured. This (pre-)configuration may be set for each resource pool. Alternatively, whether inter-UE coordination is enabled may be determined by a higher layer of the UE. In the disclosure, the method of determining whether inter-UE coordination is enabled is not limited thereto. For example, a method of signaling enabling and disabling through PC5-RRC, sidelink MAC-CE, SCI (1st SCI or 2nd SCI), or the like, may be considered. Further, whether inter-UE coordination is enabled in a UE may be determined by use of a combination of one or more of the above methods.

* Condition 3: a UE is configured to become UE-A in inter-UE coordination.

** Condition 3 above may be set through (pre-)configuration or the UE may be configured to become UE-A by a higher layer of the UE. In the disclosure, the method in which a UE is configured to become UE-A is not limited thereto. For example, it is possible to consider a method for configuring a UE to serve as UE-A by use of PC5-RRC, sidelink MAC-CE, SCI (1st SCI or 2nd SCI), or the like. Further, a UE may be configured to become UE-A in inter-UE coordination by use of a combination of one or more of the above methods.
** Condition 3 above may correspond to a case where a specific UE is configured as a UE providing inter-UE coordination information in groupcast. In this case, the corresponding UE may be a leader UE of the group.

* Condition 4: a UE is a RX UE intended for UE-B.

** According to condition 4 above, only a UE that receives a signal transmitted by UE-B may become UE-A.

* Condition 5: a UE determines that the signal reception state is poor for UE-B.

** According to condition 5 above, when the reception state is not good as a result of receiving a signal transmitted by UE-B, **the corresponding UE** may become UE-A and provide information thereon to UE-B. Hence, condition 5 may be applied together with condition 4. Here, determining that the reception state of a signal transmitted by UE-B is not good may be performed based on packet error rates or successive failures of receiving packets. The packet error rate may be a more statistical criterion, and successive failures of receiving packets may correspond to a failure of receiving X ($\geq$1) consecutive packets. Here, "packet" may mean PSCCH, PSSCH, or both PSCCH and PSSCH. When HARQ feedback is used in the sidelink, if UE-A transmits X ($\geq$1) or more NACKs to UE-B, it may be determined that the signal reception state is not good for UE-B. In the disclosure, the method for a UE to determine that the reception state of a signal for UE-B is not good is not limited thereto.

* Condition 6: a UE has sufficient power to perform inter-UE coordination.

** Condition 6 above occurs due to a fact that UE-A may consume more power because it should perform inter-UE coordination to provide relevant information to UE-B. Hence, a restriction may be placed so that only a UE configured with full sensing in mode 2 operation can become UE-A. Alternatively, a restriction may be placed so that a UE can become UE-A only when the battery level thereof is higher than a set threshold value. In the disclosure, the method in which a UE is configured as UE-A according to the power state is not limited thereto.

* Condition 7: a UE has been triggered to provide information for inter-UE coordination.

** In condition 7 above, a UE being triggered to provide information for inter-UE coordination and becoming UE-A may indicate a case where UE-B transmits a signal for requesting inter-UE coordination information to UE-A and the UE receives the signal. Alternatively, a time point at which a specific UE provides information for inter-UE coordination may be defined, and at this time point, the UE may operate as UE-A. In the former case, it may be aperiodic for UE-A to provide inter-UE coordination information, and in the latter case, it may be periodic. In the former case, it is possible to consider a method in which UE-B requests inter-UE coordination information from UE-A through PC5-RRC, sidelink MAC-CE, SCI (1st SCI or 2nd SCI), or the like. In addition, a UE may be triggered to provide information for inter-UE coordination by use of a combination of one or more of the above methods.

* Condition 8: a UE has established a unicast link with UE-B.

** According to condition 8 above, inter-UE coordination may be supported only for unicast. When UE-A and UE-B have established PC5-RRC, information may be exchanged through PC5-RRC between the UEs.

Next, at least one of the following conditions may be included as a condition for a specific UE to become UE-B. In the disclosure, the conditions for a UE to become UE-B during inter-UE coordination are not limited to the following ones.

Conditions for becoming UE-B during inter-UE coordination

* Condition 1: inter-UE coordination is enabled in a UE.

** As to condition 1 above, whether inter-UE coordination is enabled/disabled can be (pre-)configured. This (pre-)configuration may be set for each resource pool. Alternatively, whether inter-UE coordination is enabled may be determined by a higher layer of the UE. In the disclosure, the method of determining whether inter-UE coordination is enabled is not limited thereto. For example, a method of signaling enabling and disabling through PC5-RRC, sidelink MAC-CE, SCI (1st SCI or 2nd SCI), or the like, may be considered. Further, whether inter-UE coordination is enabled in a UE may be determined by use of a combination of one or more of the above methods.

* Condition 2: a UE is configured to become UE-B in inter-UE coordination.

** Condition 2 above may be set through (pre-)configuration or the UE may be configured to become UE-A by a higher layer of the UE. In the disclosure, the method in which a UE is configured to become UE-B is not limited thereto. For example, it is possible to consider a method for configuring a UE to serve as UE-B by use of PC5-RRC, sidelink MAC-CE, SCI (1st SCI or 2nd SCI), or the like. Further, a UE may be configured to become UE-B in inter-UE coordination by use of a combination of one or more of the above methods.

* Condition 3: a UE does not have sufficient power.

** Condition 3 above occurs due to a fact that UE-B can reduce power consumption because it receives resource allocation information from UE-A through inter-UE coordination and does not perform sensing for resource selection. Hence, a restriction may be placed so that a UE configured with partial sensing or random selection in mode 2 operation can become UE-B. Alternatively, a restriction may be placed so that a UE can become UE-B only when the battery level thereof is lower than a set threshold value. In the disclosure, the method in which a UE is configured as UE-B according to the power state is not limited thereto.

* Condition 4: a UE cannot perform sensing or has insufficient sensing results.

** As to condition 4 above, the case where a UE performs sidelink discontinuous reception (DRX) may be considered a case where the UE cannot perform sensing or may have insufficient sensing results. It may be assumed that the UE cannot perform sensing during the DRX inactive period. When UE-B performs sidelink DRX, UE-A needs to transmit information for inter-UE coordination (resource allocation-related information) to UE-B during the DRX active period. This is to ensure that UE-B can successfully receive the inter-UE coordination information provided by UE-A.

\* Condition 5: a UE has established a unicast link with UE-B.

\*\* According to condition 5 above, inter-UE coordination may be supported only for unicast. When UE-A and UE-B have established PC5-RRC, information may be exchanged through PC5-RRC between the UEs.

Next, when inter-UE coordination is possible in the sidelink and UE-A and UE-B are determined, the following methods may be considered a method for UE-A to provide resource allocation-related information to UE-B through inter-UE coordination.

\* Method 1: UE-A may receive inter-UE coordination information from the base station and then provide the information to UE-B.
\* Method 2: UE-A may directly identify/determine inter-UE coordination information and then provide the information to UE-B.

In the case of method 1, it may be applicable when UE-A is within the base station coverage. In addition, the information shared from UE-B to UE-A (information that helps the base station control inter-UE coordination between UE-A and UE-B) may be reported to the base station through Uu-RRC. In a case where UE-B is outside the base station coverage, UE-B may request inter-UE coordination information from UE-A (as a method for UE-B to request inter-UE coordination information from UE-A, PC5-RRC, sidelink MAC CE, SCI (1st SCI or 2nd SCI), or the like may be considered), and UE-A may request inter-UE coordination information (resource allocation information) for UE-B from the base station (as a method for UE-A to request inter-UE coordination information for UE-B from the base station, Uu-RRC, Uu MAC CE, or the like may be considered). Upon receiving inter-UE coordination information for UE-B from the base station, UE-A may provide this information to UE-B as it is, or may provide information newly determined based on the received information to UE-B. In contrast, in the case of method 2, as UE-A directly identifies/determines inter-UE coordination information and provides it to UE-B, method 2 can be supported regardless of the location of UE-A (within or out of base station coverage). A method in which UE-A determines/indicates inter-UE coordination information will be described in more detail when method 2 is supported in the following embodiments. Information exchange for inter-UE coordination in the sidelink between UEs may be achieved through PC5-RRC, sidelink MAC-CE, SCI (1st SCI or 2nd SCI), or the like. Information exchange for inter-UE coordination in the sidelink between UEs may be achieved by use of a combination of one or more of the above methods. Further, in the disclosure, the method of indicating information for performing inter-UE coordination is not limited thereto.

<Second Embodiment>

In the second embodiment, when UE-A provides resource allocation-related information to UE-B as information for inter-UE coordination in the sidelink, this will be described in detail. Here, the UE may be a vehicle UE or a pedestrian UE. The following two methods may be regarded as an inter-UE coordination scheme in which UE-A provides resource allocation-related information to UE-B. In the disclosure, the inter-UE coordination scheme is not limited to the following ones.

Inter-UE coordination scheme

\* Scheme 1: UE-A transmits, as inter-UE coordination information, **a set of time-frequency resources allocated for UE-B's transmission.**

\*\* In scheme 1 above, the set of time-frequency resources allocated for UE-B's transmission may be allocation information of resources selected for (re)transmission of one or more transport blocks (TBs). Also, here, **the selected set of allocated** resources may be allocation information of resources suitable (preferred) or unsuitable (non-preferred) for UE-B's transmission. Further, **the selected set of allocated resources** may include both resources suitable for UE-B's transmission and resources unsuitable therefor. For detailed operations of the UE for scheme 1, refer to the fourth embodiment below.
\*\* Information on whether the set of allocated resources selected for UE-B's transmission in scheme 1 is suitable (preferred) or unsuitable (non-preferred) resource allocation information for UE-B's transmission may be indicated to UE-B by UE-A using 1-bit information. The indication of the corresponding information may be made through PC5-RRC, sidelink MAC-CE, SCI (1st SCI or 2nd SCI), or the like. It may also be made through a combination of one or more of the above methods. In the disclosure, the method of indicating the corresponding information is not limited thereto.

* Scheme 2: UE-A transmits, as inter-UE coordination information, whether there is a resource conflict in relation to resource allocation information indicated by the UE-B through SCI.

** In scheme 2 above, whether there is a resource conflict in the resource allocation information indicated by UE-B through SCI may be whether there is a resource conflict detected by UE-A. Or, it may be whether there is an expected or potential resource conflict. Or, it may include both whether there is a resource conflict detected by UE-A and whether there is an expected/potential resource conflict. Further, in scheme 2, the presence of a resource conflict may be interpreted as that the resource allocation information indicated by UE-B through SCI is unsuitable (non-preferred). For detailed operations of the UE for scheme 2, refer to the third embodiment below.

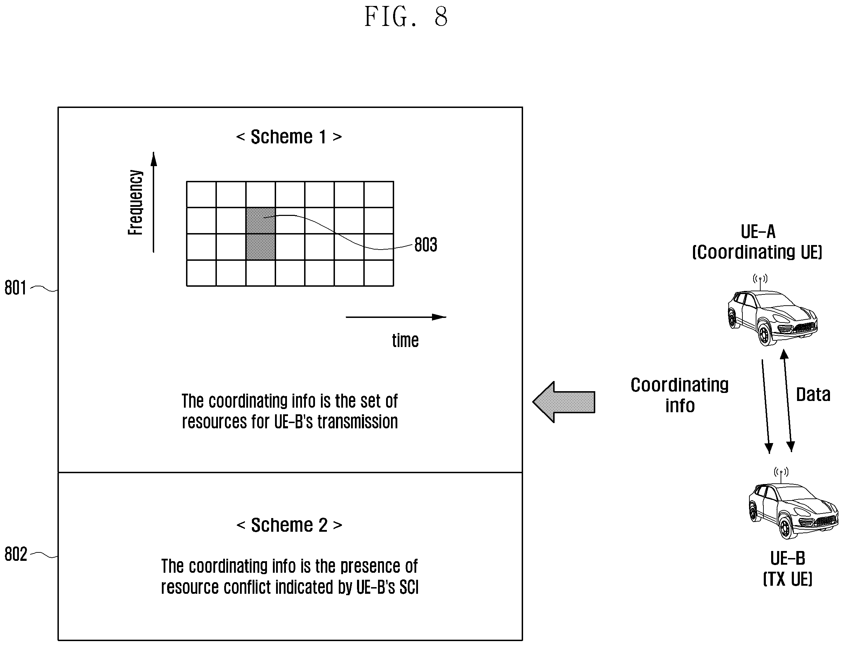

FIG. 8 is a diagram illustrating two schemes of inter-UE coordination according to an embodiment of the disclosure. According to inter-UE coordination scheme 1 (801), UE-A may provide UE-B with information 803 about a set of suitable (preferred) or unsuitable (non-preferred) time-frequency resources allocated for transmission. In contrast, according to inter-UE coordination scheme 2 (802), UE-A may provide UE-B with only whether the resource reserved by UE-B through SCI is suitable. In the case of inter-UE coordination scheme 1, as UE-A has to signal set information 803 about allocated time-frequency resources to UE-B, the signaling overhead may be increased in comparison to inter-UE coordination scheme 2. In the case of inter-UE coordination scheme 2, as UE-A signals to UE-B only whether the resource reserved by UE-B through SCI is suitable, the suitability may be indicated with 1-bit information.

In the sidelink, only one of inter-UE coordination scheme 1 and scheme 2 may be supported, or both schemes may be supported. In a case where both schemes are supported, the UE needs to select one of the two schemes to operate. In the following embodiment, when both inter-UE coordination scheme 1 and inter-UE coordination scheme 2 are supported, conditions under which scheme 1 and scheme 2 can be selected are presented. First, at least one of the following conditions may be included as a condition under which inter-UE coordination scheme 1 can be selected. In the disclosure, it is not limited only to the conditions presented below.

Conditions under which inter-UE coordination scheme 1 is operated

* Condition 1: UE-A is configured to operate inter-UE coordination scheme 1.

** As to condition 1 above, the UE may be configured to operate inter-UE coordination scheme 1 through (pre-)configuration or may be configured to operate inter-UE coordination scheme 1 by a higher layer of the UE. In the disclosure, the method of configuring inter-UE coordination scheme 1 is not limited thereto. For example, it is possible to consider a method of configuring inter-UE coordination scheme 1 through PC5-RRC, sidelink MAC-CE, SCI (1st SCI or 2nd SCI), or the like. Further, the UE may be configured to operate inter-UE coordination scheme 1 through a combination of one or more of the above methods.

* Condition 2: UE-A has sufficient power to perform inter-UE coordination.

** Condition 2 above occurs due to an assumption that when UE-A operates inter-UE coordination scheme 1, an additional sensing operation is performed, and when UE-A operates inter-UE coordination scheme 2, no additional sensing operation is performed to thereby reduce power consumption. Hence, a restriction may be placed so that a UE configured with full sensing in mode 2 operation can operate inter-UE coordination scheme 1. Alternatively, a restriction may be placed so that a UE can operate inter-UE coordination scheme 1 only when the battery level thereof is higher than a set threshold value. In the disclosure, the method for selecting the inter-UE coordination scheme according to the power state of the UE is not limited thereto.

* Condition 3: UE-A has established a unicast link with UE-B.

** According to condition 3 above, inter-UE coordination scheme 1 can be supported only in unicast. In the case of inter-UE coordination scheme 1, it is necessary for UE-A to receive prior information such as UE-B's traffic-related requirements from UE-B. When UE-A and UE-B establish PC5-RRC, information exchange may be performed between the UEs through PC5-RRC.

Next, at least one or more of the following conditions may be included as a condition under which inter-UE coordination scheme 2 can be selected. In the present invention, it is not limited only to the conditions presented below.

Conditions under which inter-UE coordination scheme 2 is operated

* Condition 1: UE-A is configured to operate inter-UE coordination scheme 2.

** As to condition 1 above, the UE may be configured to operate inter-UE coordination scheme 2 through (pre-)configuration or may be configured to operate inter-UE coordination scheme 2 by a higher layer of the UE. In the disclosure, the method of configuring inter-UE coordination scheme 2 is not limited thereto. For example, it is possible to consider a method of configuring inter-UE coordination scheme 2 through PC5-RRC, sidelink MAC-CE, SCI (1st SCI or 2nd SCI), or the like. Further, the UE may be configured to operate inter-UE coordination scheme 2 through a combination of one or more of the above methods.

* Condition 2: UE-A has insufficient power.

** Condition 2 above occurs due to an assumption that when UE-A operates inter-UE coordination scheme 1, an additional sensing operation is performed, and when UE-A operates inter-UE coordination scheme 2, no additional sensing operation is performed to thereby reduce power consumption. Hence, a restriction may be placed so that a UE configured with partial sensing or random selection in mode 2 operation can operate inter-UE coordination scheme 2. Alternatively, a restriction may be placed so that a UE can operate inter-UE coordination scheme 2 only when the battery level thereof is lower than a set threshold value. In the disclosure, the method for selecting the inter-UE coordination scheme according to the power state of the UE is not limited thereto.

* Condition 3: UE-A has received SCI from UE-B.

** As to condition 3 above, in inter-UE coordination scheme 2, unlike inter-UE coordination scheme 1, after UE-A receives SCI (1st SCI, in other words, PSCCH) from UE-B and identifies information about resources reserved by UE-B, it can determine suitability of the resource.

* Condition 4: UE-A cannot perform resource selection for UE-B's transmission.

** Condition 4 above may correspond to a case in which UE-A cannot operate inter-UE coordination scheme 1. For example, a case may arise in which even if UE-A selects a resource through inter-UE coordination scheme 1, corresponding information is no longer valid due to a delay time caused by inter-UE coordination.

In the above description, when inter-UE coordination scheme 1 and inter-UE coordination scheme 2 are supported in the sidelink, conditions for UE-A to select one of the two schemes are presented. However, when UE-A can use both inter-UE coordination scheme 1 and scheme 2, the UE may be allowed to directly select one of the two schemes without determination based on the above conditions. This may be interpreted as UE implementation. In addition, UE-A may signal the scheme selected by UE-A from inter-UE coordination scheme 1 and scheme 2 to UE-B. Which of inter-UE coordination scheme 1 and scheme 2 has been selected by UE-A can be indicated by using 1-bit information, and signaling for this may be performed through PC5-RRC, sidelink MAC-CE, SCI (1st SCI or 2nd SCI), or the like. Further, the information indicating the scheme selected by UE-A among inter-UE coordination scheme 1 and scheme 2 may be signaled to UE-B through a combination of one or more of the above methods. In the disclosure, the method in which UE-A notifies UE-B of information on which of inter-UE coordination scheme 1 and scheme 2 is selected is not limited thereto.

<Third Embodiment>

In the third embodiment, detailed UE operations for inter-UE coordination scheme 2 in the sidelink described in the second embodiment will be described. Specifically, when inter-UE coordination scheme 2 is used, a method for UE-A to determine and identify that a resource occupied by UE-B through SCI is not suitable for transmission is described. Here, the UE may be a vehicle UE or a pedestrian UE.

According to inter-UE coordination scheme 2 in the sidelink, UE-A transmits, as inter-UE coordination information, whether there is a resource conflict in the resource allocation information indicated by UE-B through SCI. Here, whether there is a resource conflict in the resource allocation information indicated by UE-B through SCI may be whether there is a resource conflict detected by UE-A. Or, it may be whether there is an expected or potential resource conflict. Here, the presence of a resource conflict detected by UE-A and the presence of an expected/potential resource conflict may be interpreted as that the resource allocation information indicated by UE-B through SCI is unsuitable (non-preferred). The disclosure is not limited to this interpretation. Note that other similar interpretations are possible. In the case of inter-UE coordination scheme 2, as UE-A signals to UE-B only whether the resource reserved by UE-B through SCI is suitable, 1-bit information may be used to indicate suitability. At least one of the following information may be considered by UE-A to determine that resource allocation information indicated by UE-B through SCI is unsuitable (non-preferred). The disclosure is not limited to only the following pieces of information.

Information used in inter-UE coordination scheme 2 to determine that UE-B's resource allocation information is unsuitable

* Information 1: UE-A's reception state of a signal from UE-B

** As to information 1 above, UE-A's determining that the reception state of a signal transmitted by UE-B is poor can be made based on packet error rates or successive failures of receiving packets. The packet error rate may be a statistical criterion, and successive failures of receiving packets may correspond to a failure of receiving X ($\geq$1) consecutive packets. Here, "packet" may mean PSCCH, PSSCH, or both PSCCH and PSSCH. In the disclosure, the method for a UE to determine that the reception state of a signal from UE-B is not good is not limited thereto.

* Information 2: results of sensing performed by UE-A

** As to information 2 above, UE-A' sensing may mean SCI (1st SCI, in other words, PSCCH) decoding or SL RSRP (sidelink reference signal received power) measurement. Both SCI decoding and SL RSRP measurement may be included, or only one of them may be included. UE-A may determine whether the resource reserved by UE-B through SCI (1st SCI, in other words, PSCCH) is suitable through sensing.

* Information 3: information about a resource selected by UE-A for its NR sidelink transmission

** As to information 3 above, since simultaneous transmission and reception is not possible due to half duplex if the resource selected by UE-A for its NR sidelink transmission overlaps in time and frequency with the resource reserved by UE-B through SCI (1st SCI, in other words, PSCCH), it is possible to determine whether the resource reserved by UE-B through SCI is suitable by use of information 3.
** As to information 3 above, the information about a resource selected by UE-A for its NR sidelink transmission may mean a set of allocated time-frequency resources selected for (re)transmission of one or more transport blocks (TBs).
** According to information 3 above, the information about a resource selected by UE-A for its NR sidelink transmission may include a whole set of allocated time-frequency resources selected for (re)transmission of one or more transport blocks (TBs) or may include only a subset of the whole set. If only a subset is included, the subset may be limited to only initial transmission resources. This may be because determining unsuitability of initial transmission resources is more important compared with a case of retransmission resources.

* Information 4: information about a set of allocated time-frequency resources selected by UE-A for another UE-B

** As to information 4 above, when the set of allocated time-frequency resources selected by UE-A for another UE-B overlaps in time and frequency with the resources reserved by UE-B through SCI (1st SCI, in other words, PSCCH), as simultaneous reception from different UE-Bs cannot be expected, it is possible to determine whether the resource reserved by UE-B through SCI is suitable based on information 4.

* Information 5: information about a resource scheduled or configured for UE-A's UL transmission

** As to information 5 above, when the resource scheduled or configured by UE-A for UL transmission overlaps in time and frequency with the resource reserved by UE-B through SCI (1st SCI, in other words, PSCCH), as simultaneous transmission and reception is not possible due to half duplex, it is possible to determine whether the resource reserved by UE-B through SCI is suitable based on information 5.

* Information 6: information about LTE sidelink transmission and reception of UE-A

** As to information 6 above, when the resource allocated for UE-A's LTE sidelink transmission and reception overlaps in time and frequency with the resource reserved by UE-B through SCI (1st SCI, in other words, PSCCH), as simultaneous transmission and reception is not possible due to half duplex or a resource conflict is expected, it is possible to determine whether the resource reserved by UE-B through SCI is suitable based on information 6.

* Information 7: information about UE-A's PSFCH transmission and reception

** As to information 7 above, since PSFCH transmission and reception is determined by the location of resources allocated for PSSCH transmission, it may be determined that the time and frequency location of the PSSCH resource reserved by UE-B through SCI (1st SCI, in other words, PSCCH) is not suitable for PSFCH transmission and reception, and thus it is possible to determine whether the resource reserved by UE-B through SCI is suitable based on information 7.

* Information 8: inter-UE coordination information received by UE-A from another UE

** As to information 8 above, when UE-A has received allocation information of suitable (preferred) or unsuitable (non-preferred) resources from another UE, if the resource indicated by allocation information determined therefrom overlaps in time and frequency with the resource reserved by UE-B through SCI (1st SCI, in other words, PSCCH), as simultaneous transmission and reception is not possible due to half duplex or a resource conflict is expected, it is possible to determine whether the resource reserved by UE-B through SCI is suitable based on information 8.

* Information 9: location information received by UE-A from UE-B or other UEs

** As to information 9 above, even when a resource conflict is expected for the resource reserved by UE-B through SCI (1st SCI, in other words, PSCCH), as it is expected that interference will be small if the distance is far according to the location information, it is possible to determine whether the resource reserved by UE-B through SCI is suitable based on information 9.

* Information 10: information on whether UE-B can use inter-UE coordination information

** As to information 10 above, even when a resource conflict is expected for the resource reserved by UE-B through SCI (1st SCI, in other words, PSCCH) based on the above pieces of information, if UE-B cannot use inter-UE coordination information according to information 10, UE-A may not provide inter-UE coordination information to UE-B. Whether UE-B can use inter-UE coordination information is related to whether to determine a UE to be UE-B, so refer to the conditions under which a UE may become UE-B during inter-UE coordination in the first embodiment of the disclosure.

Note that the information presented above used for determining that the resource allocation information of UE-B is unsuitable in inter-UE coordination scheme 2 may also be used in inter-UE coordination scheme 1. For a detailed description thereof, refer to the fourth embodiment.

<Fourth Embodiment>

In the fourth embodiment, detailed UE operations for sidelink inter-UE coordination scheme 1 described in the second embodiment will be described. Specifically, in a case where inter-UE coordination scheme 1 is used, a method for UE-A to select a transmission resource preferred by UE-B through sensing is described. Here, the UE may be a vehicle UE or a pedestrian UE.

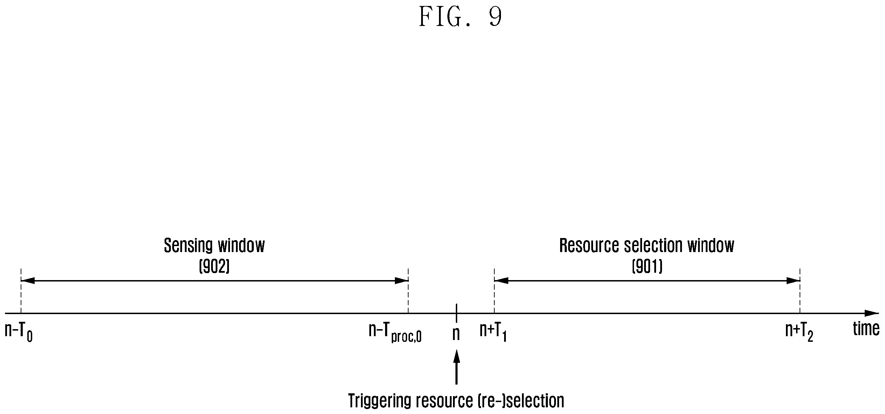

First, the mode 2 operation in which a regular UE selects a transmission resource through sensing may be performed through seven steps as shown in Table 1 below. In a case where a UE performs mode 2 operation, refer to FIG. 9 for a sensing window and a resource selection window when resource (re)selection is triggered in slot 'n'. FIG. 9 is a diagram illustrating a sensing window and a resource selection window when resource (re)selection is triggered for a UE performing mode 2 operation.

[Table 1] Seven steps in which UE selects transmission resource through sensing

The following steps are used:

1) A candidate single-slot resource for transmission $R_{x,y}$ is defined as a set of $L_{subCH}$ contiguous sub-channels with sub-channel x+j in slot $t'^{SL}_y$ where $j = 0,..., L_{subCH} - 1$. The UE shall assume that any set of $L_{subCH}$ contiguous sub-channels included in the corresponding resource pool within the time interval $[n + T_1, n + T_2]$ correspond to one candidate single-slot resource, where

   - selection of $T_1$ is up to UE implementation under $0 \leq T_1 \leq T^{SL}_{proc,1}$, where $T^{SL}_{proc,1}$ is defined in slots in Table 8.1.4-2 where $\mu_{SL}$ is the SCS configuration of the SL BWP;

   - if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).

   The total number of candidate single-slot resources is denoted by $M_{total}$.

2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured

   in these slots.

3) The internal parameter $Th(p_i, p_j)$ is set to the corresponding value of RSRP threshold indicated by the i-th field in *sl-Thres-RSRP-List*, where $i = p_i + (p_j - 1) * 8$.

4) The set $S_A$ is initialized to the set of all the candidate single-slot resources.

5) The UE shall exclude any candidate single-slot resource $R_{x,y}$ from the set $S_A$ if it meets all the following conditions:

   - the UE has not monitored slot $t'^{SL}_m$ in Step 2.

   - for any periodicity value allowed by the higher layer parameter *sl-ResourceReservePeriodList* and a hypothetical SCI format 1-A received in slot $t'^{SL}_m$ with *'Resource reservation period'* field set to that periodicity value and indicating all subchannels of the resource pool in this slot, condition c in step 6 would be met.

6) The LTE shall exclude any candidate single-slot resource $R_{x,y}$ from the set $S_A$ if it meets all the following conditions:

   a) the UE receives an SCI format 1-A in slot $t'^{SL}_m$, and *'Resource reservation period'* field, if present, and *'Priority'* field in the received SCI format 1-A indicate the values $P_{rsvp\_RX}$ and $prio_{RX}$, respectively according to Clause 16.4 in [6, TS 38.213];

   b) the RSRP measurement performed, according to clause 8.4.2.1 for the received SCI format 1-A, is higher than $Th(prio_{RX}, prio_{TX})$;

(continued)

c) the SCI format received in slot $t'^{SL}_m$ or the same SCI format which, if and only if the 'Resource reservation period' field is present in the received SCI format 1-A, is assumed to be received in slot(s) $t'^{SL}_{m+q \times P'_{rsvp\_RX}}$

determines according to clause 8.1.5 the set of resource blocks and slots which overlaps with $R_{x,y+j \times P'_{rsvp\_TX}}$

for $q=1, 2, ..., Q$ andj=O, 1...., $C_{reset}$ - 1. Here, $P'_{rsvp\_RX}$ is $P_{rsvp\_RX}$ converted to units of logical slots according to clause 8.1.7, $Q = \left\lceil \frac{T_{scal}}{P_{rsvp\_RX}} \right\rceil$ if $P_{rsvp\_RX} < T_{scal}$ and $n' - m \leq P'_{rsvp\_RX}$ , where $t'^{SL}_{n'} = n$ if slot $n$

belongs to the set ( $t'^{SL}_0, t'^{SL}_1, ..., t'^{SL}_{T'_{max}-1}$ ), otherwise slot $t'^{SL}_{n'}$ is the first slot after slot n belonging to the

set ( $t'^{SL}_0, t'^{SL}_1, ..., t'^{SL}_{T'_{max}-1}$ ); otherwise Q = 1. $T_{scal}$ is set to selection window size $T_2$ converted to units of msec.

7) If the number of candidate single-slot resources remaining in the set $S_A$ is smaller than X · $M_{total}$. then $Th(p_i, p_j)$ is increased by 3 dB for each priority value $Th(p_i,p_j)$ and the procedure continues with step 4.

The UE shall report set $S_A$ to higher layers.

According to Table 1, at step 1), the UE identifies the total number $M_{total}$ of candidate resources selectable in the resource selection window 901 as shown in FIG. 9. At step 2), the UE performs monitoring (sensing) on slots through SCI decoding and sidelink reference signal received power (SL RSRP) measurement within the sensing window 902 as shown in FIG. 9 except for a slot that is not monitored due to sidelink transmission. Here, SCI decoding has the same meaning as PSSCH decoding, and allocation information of resources occupied by other UEs may be identified through SCI decoding. At step 3), the UE sets an RSRP threshold $Th(p_i,p_j)$, where the RSRP threshold may be determined as a function of a priority value $p_j$ for UE's resource selection and a priority value $p_i$ of the received SCI. At step 4), the UE initializes the set $S_A$ of candidate resources to all selectable candidate resources identified at step 1). At step 5), in case that there is an unmonitored slot at step 2) due to sidelink transmission, the UE reflects all resource reservation periods in sl-ResourceReservePeriodList set for this slot by a higher layer, and excludes, if the corresponding resource overlaps a candidate resource in the set $S_A$ of candidate resources, the candidate resource from $S_A$. At step 6), for a slot for which monitoring (sensing) is performed at step 2), if SCI is decoded and a corresponding resource occupied by another UE (as indicated by resource allocation information identified through SCI decoding) overlaps a candidate resource in the set $S_A$ of candidate resources, and the measured SL RSRP value is higher than the RSRP threshold, then the UE excludes the candidate resource from $S_A$. Finally, at step 7), if the number of candidate resources remaining in the set $S_A$ of candidate resources is less than $X \cdot M_{total}$, the UE increases the RSRP threshold by 3 dB and repeats steps 4) to 7). When the number of resources remaining in $S_A$ is greater than or equal to $X \cdot M_{total}$, the UE reports $S_A$ to a higher layer of the UE. For more details, refer to Table 1.

When inter-UE coordination scheme 1 is used and UE-A selects a transmission resource preferred by UE-B through sensing, mode 2 resource selection steps described in Table 1 and FIG. 9 may be reused. However, unlike general mode 2 operation described with reference to Table 1 and FIG. 9, when UE-A selects a resource for UE-B's transmission by using inter-UE coordination scheme 1, mode 2 operation described in Table 1 and FIG. 9 may be modified in terms of one or more of the following operations or a combination thereof. The disclosure is not limited only to the modifications presented below.

Modifications to mode 2 operation when inter-UE coordination scheme 1 is used

* Operation 1: the resource selection window 901 at step 1) in Table 1 may be determined as [n+$T_X$, n+$T_2$]. Here, Tx may be determined according to the following conditions.
**

$$T_X = T_1 \quad \text{if} \quad T_d < T_1$$

**

$$T_X = T_d \quad \text{if} \quad T_d \geq T_1$$

** $T_d$ is defined to be a value reflecting the delay caused by inter-UE coordination in the sidelink, and may be set through a higher layer or be a fixed value. Here, $T_d$ may be set in units of slots or ms. However, in the disclosure, the value set as $T_d$ is not limited to a specific value.

* Operation 2: when inter-UE coordination scheme 1 is used, the RSRP threshold at step 3) in Table 1 may be set independently of that in general mode 2 operation or may be set together with an offset value.

* Operation 3: step 5) in Table 1 may be skipped or may be replaced with a step of excluding, from the set $S_A$ of candidate resources, resource(s) for which resource allocation information indicated by UE-B through SCI is determined to be unsuitable (non-preferred) according to the information used to determine suitability of the resource allocation information of UE-B in inter-UE coordination scheme 2 presented through the third embodiment.

> ** The reason why step 5) is skipped in operation 3 is that the resource excluded at step 5) in Table 1 is not a resource excluded through sensing unlike step 6), so it may be inappropriate as resource allocation information determined to be suitable (preferred) or unsuitable (non-preferred) in inter-UE coordination scheme 1.
>
> ** In operation 3, the operation of **excluding, from the set $S_A$ of candidate resources, candidate resource(s) overlapping with a corresponding resource for which** the resource allocation information indicated by UE-B through SCI is determined to be unsuitable (non-preferred) according to the information used in inter-UE coordination scheme 2 to determine suitability of resource allocation information of UE-B, may be interpreted as an operation in which inter-UE coordination scheme 1 and inter-UE coordination scheme 2 are combined. Alternatively, the corresponding operation may be interpreted as being independent of inter-UE coordination method 2.

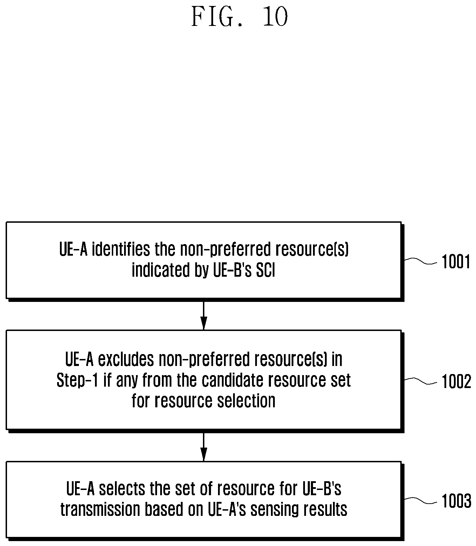

FIG. 10 is a diagram illustrating operations in which inter-UE coordination scheme 1 and inter-UE coordination scheme 2 are combined according to an embodiment of the disclosure when inter-UE coordination is performed and UE-A provides resource allocation information suitable (preferred) for UE-B's transmission. In a case where inter-UE coordination is performed and UE-A uses inter-UE coordination scheme 2, as indicated in operation 1001 of FIG. 10, UE-A transmits, as inter-UE coordination information, whether there is a resource conflict with respect to resource allocation information indicated by UE-B through SCI. Here, whether there is a resource conflict may be interpreted as whether UE-B's resource allocation information is suitable. In addition, UE-A may provide UE-B only with 1-bit information indicating whether the resource reserved by UE-B is suitable. On the other hand, in a case where UE-A uses inter-UE coordination scheme 1, a combination with inter-UE coordination scheme 2 may be considered, and operations 1001 to 1003 of FIG. 10 may be considered together. As described above, operation 1001 refers to inter-UE coordination scheme 2, and in a case where inter-UE coordination scheme 1 is used, operation 1002 may be performed, where step 5) in Table 1 as in operation 3 for modified mode 2 operation may be executed as an operation of excluding, from the set $S_A$ of candidate resources, candidate resource(s) overlapping with a corresponding resource for which resource allocation information indicated by UE-B through SCI is determined to be unsuitable (non-preferred) according to the information used to determine suitability of the resource allocation information of UE-B in inter-UE coordination scheme 2 presented through the third embodiment. Then, at operation 1003, UE-A may select **a set of time-frequency resources to be allocated for** UE-B's transmission through inter-UE coordination scheme 1.

Further, the following methods may be considered when selecting a set of time-frequency resources to be allocated for UE-B's transmission through inter-UE coordination scheme 1. The disclosure is not limited to the methods presented below.

Resource selection methods using inter-UE coordination scheme 1

> * Method 1: UE-A separately selects and reserves a set of resources for UE-A's transmission and a set of resources for UE-B's transmission according to inter-UE coordination scheme 1.
>
> ** According to method 1 above, UE-A may separately select and reserve a set X of resources for UE-A's transmission and a set Y of resources for UE-B's transmission. Hence, periodic reservations may also be independently applied.

* Method 2: UE-A selects and reserves a set of resources for UE-A's transmission in association with a set of resources for UE-B's transmission according to inter-UE coordination scheme 1.

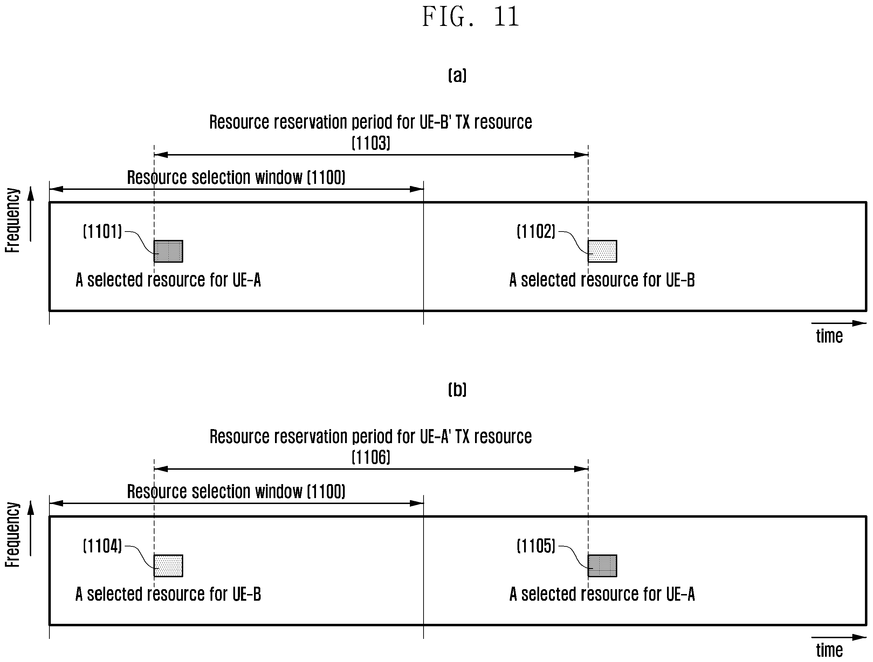

** According to method 2 above, when UE-A selects and reserves a set X of resources for UE-A's transmission, a set Y of resources for UE-B's transmission may be determined in association with the set X of resources. Specifically, a corresponding case is illustrated in part (a) of FIG. 11. Referring to part (a) of FIG. 11, a resource X (1101) for UE-A's transmission is selected within a resource selection window 1100, and a resource Y (1102) for UE-B's transmission may be determined from the resource X (1101) for UE-A's transmission. For example, a resource reservation period 1103 for resource selection/reservation for UE-B's transmission may be set, and the resource Y (1102) for UE-B's transmission may be selected/reserved therefrom.

** According to method 2 above, when UE-A selects and reserves a set Y of resources for UE-B's transmission, a set X of resources for UE-A's transmission may be determined in association with the set Y of resources. Specifically, a corresponding case is illustrated in part (b) of FIG. 11. With reference to part (b) of FIG. 11, a resource Y (1104) for UE-B's transmission is selected within a resource selection window 1100, and a resource X (1105) for UE-A's transmission may be determined from the resource Y (1104) for UE-B's transmission. For example, a resource reservation period 1106 for resource selection/reservation for UE-A's transmission may be set, and the resource X (1105) for UE-A's transmission may be selected/reserved therefrom.

In a case where inter-UE coordination scheme 1 is used and UE-A provides suitable (preferred) or unsuitable (non-preferred) resource allocation information for UE-B's transmission, whether the resource allocation information provided by UE-A to UE-B is suitable (preferred) resource allocation information or unsuitable (non-preferred) resource allocation information for UE-B's transmission may be additionally indicated. This information may be signaled with 1-bit information. Such an indication may be performed through PC5-RRC when a PC5-RRC connection between UEs is made. In the disclosure, the method of exchanging information required for inter-UE coordination is not limited to PC5-RRC. For example, it is possible to consider a method of signaling necessary information through sidelink MAC-CE, SCI (1st SCI or 2nd SCI), or the like. Further, exchanging information required for inter-UE coordination may be achieved through a combination of one or more of the above methods.

In addition, when inter-UE coordination scheme 1 is used, prior information necessary for UE-A to provide resource allocation information to UE-B needs to be shared between UE-A and UE-B. Specifically, UE-A needs to be provided with information, such as information about a transmission resource pool (TX pool) used by UE-B, traffic requirements of UE-B, resource configuration information, and CBR measurement results of UE-B. For example, assuming that the transmission resource pool (TX pool) used by UE-B is resource pool A, UE-A should provide a resource selected from resource pool A to UE-B. In general, this is because the transmission resource pool (TX pool) configured in UE-A and the transmission resource pool (TX pool) configured in UE-B may be different from each other. If UE-A is to provide resource allocation information to UE-B, the transmission resource pool (TX pool) of UE-B should be the same as the transmission resource pool of UE-A, or otherwise UE-A needs to know information about the transmission resource pool (TX pool) of UE-B. When a plurality of transmission pools are configured in UE-B, UE-A may provide UE-B with a preferred transmission pool among the plural transmission pools. Further, UE-A may provide UE-B with allocation information of time-frequency resources selected for actual resource transmission from the transmission resource pool of UE-B. In this way, in order for UE-A to know information on the transmission resource pool (TX pool) of UE-B and to perform inter-UE coordination, UE-A may notify UE-B of a transmission resource pool to be used by UE-B, information about the transmission resource pool to be used by UE-B needs to be indicated to UE-A, or the transmission resource pool information needs to be shared between UE-A and UE-B. In addition, it may be assumed that UE-A and UE-B perform inter-UE coordination in the corresponding transmission resource pool. In a case where inter-UE coordination becomes available and UE-A and UE-B are determined, information required for inter-UE coordination scheme 1 between UE-A and UE-B is not limited to the resource pool information presented above. Such information exchange may be performed through PC5-RRC when a PC5-RRC connection between UEs is made. In the disclosure, the method of exchanging information required for inter-UE coordination is not limited to PC5-RRC. For example, it is possible to consider a method of signaling necessary information through sidelink MAC-CE, SCI (1st SCI or 2nd SCI), or the like. Further, exchanging information required for inter-UE coordination may be achieved through a combination of one or more of the above methods.

<Fifth Embodiment>

In the fifth embodiment, a description is given of operations of UE-B when UE-B receives resource allocation-related information from UE-A through inter-UE coordination. Here, the UE may be a vehicle UE or a pedestrian UE.

First, when inter-UE coordination scheme 1 is used, the following methods may be considered a UE operation of UE-B. The disclosure is not limited to the methods presented below. Refer to the second embodiment for the condition for inter-UE coordination scheme 1 to be used.

Operations of UE-B when inter-UE coordination scheme 1 is used

* Method 1: UE-B selects a resource for UE-B's transmission by using the resource allocation information provided from UE-A through inter-UE coordination and the result obtained by direct sensing of UE-B.
* Method 2: UE-B selects a resource for UE-B's transmission by using only the resource allocation information provided from UE-A through inter-UE coordination.

When inter-UE coordination scheme 1 is used, only one of the methods presented above may be supported as operation of UE-B. On the other hand, when both of the above methods are supported, whether UE-B uses method 1 or method 2 may be determined by UE implementation. For example, whether to use method 1 or method 2 may be determined according to the power state of UE-B. This is based on an assumption that when method 1 is operated, an additional sensing operation is performed, and when method 2 is operated, no additional sensing operation is performed to thereby reduce power consumption. Hence, a restriction may be placed so that a UE configured with partial sensing or random selection in mode 2 operation operates method 2. Alternatively, a restriction may be placed so that a UE operates method 2 only when the battery level thereof is lower than a set threshold value. In the disclosure, the method for determining UE-B's operation according to the power state thereof is not limited thereto.

On the other hand, when inter-UE coordination scheme 2 is used, the following methods may be considered a UE operation of UE-B. The disclosure is not limited to the methods presented below. Refer to the second embodiment for the condition for inter-UE coordination scheme 2 to be used.

Operations of UE-B when inter-UE coordination scheme 2 is used

* Method 1: UE-B may perform resource reselection based on resource allocation information (whether the resource reserved by UE-B is suitable) provided from UE-A through inter-UE coordination.
* Method 2: UE-B may perform resource retransmission based on resource allocation information (whether the resource reserved by UE-B is suitable) provided from UE-A through inter-UE coordination.

When inter-UE coordination scheme 2 is used, only one of the methods presented above may be supported as operation of UE-B. On the other hand, when both of the above methods are supported, whether UE-B uses method 1 or method 2 may be determined by UE implementation.

<Sixth Embodiment>

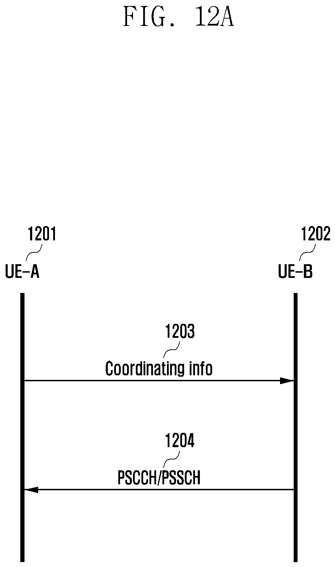

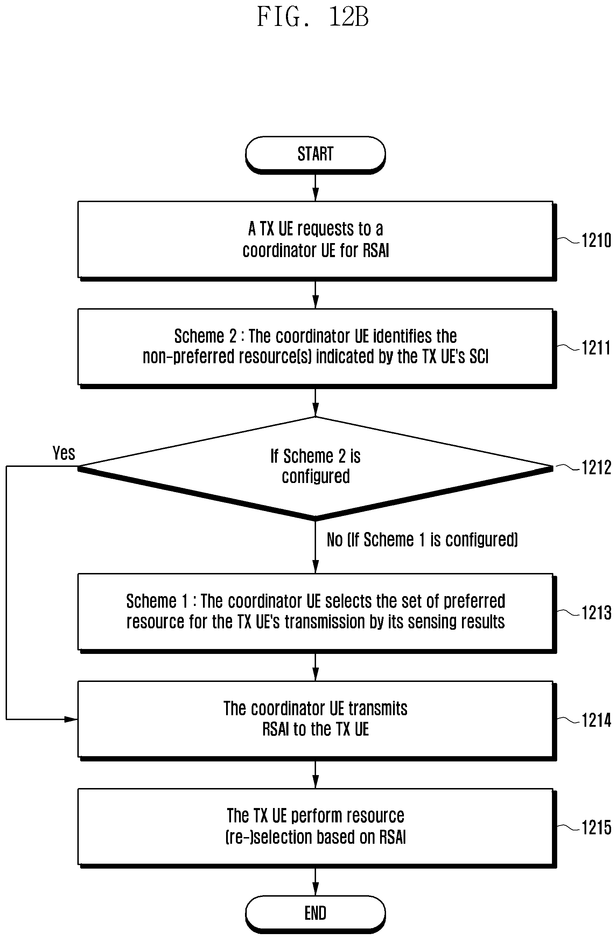

In the sixth embodiment, an overall operation in which UE-A and UE-B perform inter-UE coordination will be described with reference to FIG. 12. In the disclosure, a UE providing relevant information for inter-UE coordination is referred to as UE-A 1201, and a UE receiving relevant information for inter-UE coordination is referred to as UE-B 1202. For the conditions for a UE to become UE-A and the conditions for a UE to become UE-B when inter-UE coordination is performed in the sidelink, refer to the first embodiment. Inter-UE coordination information 1203 provided by UE-A 1201 to UE-B 1202 may be resource allocation-related information for transmission of UE-B 1202. For details on such resource allocation-related information, refer to the second embodiment. In the second embodiment, inter-UE coordination scheme 1 and inter-UE coordination scheme 2 are presented according to the details of resource allocation-related information. Also, in the second embodiment, the conditions under which inter-UE coordination scheme 1 and inter-UE coordination scheme 2 are used have been proposed. When inter-UE coordination scheme 1 is used, refer to the third embodiment for the detailed operations of UE-A. In addition, when inter-UE coordination scheme 2 is used, refer to the fourth embodiment for the detailed operations of UE-A. In the fourth embodiment, a UE operation in which inter-UE coordination scheme 1 and inter-UE coordination scheme 2 are operated in combination is also proposed. Finally, when UE-B receives resource allocation-related information from UE-A through inter-UE coordination, refer to the fifth embodiment for a method for UE-B 1202 to utilize the resource allocation-related information. The UE may use the inter-UE coordination information 1203 to determine a resource for transmission of UE-B 1202 or to reselect or retransmit the resource for transmission of UE-B 1202. Here, the operation of UE-B may vary depending on whether inter-UE coordination information 1203 is inter-UE coordination scheme 1 or inter-UE coordination scheme 2. Finally, UE-B may determine the transmission resource of UE-B 1202 from the inter-UE coordination information 1203 to perform PSCCH/PSSCH transmission 1204. Although it is illustrated FIG. 12A that UE-B 1202 performs PSCCH/PSSCH transmission 1204 to UE-A 1201, a case where UE-B 1202 performs PSCCH/PSSCH transmission 1204 to a UE other than UE-A 1201 may also be included. In other words, UE-A 1201 may be not a receiving UE intended for UE-B 1202.

<Seventh Embodiment>

In the seventh embodiment, as another embodiment of the disclosure, the overall operation of performing inter-UE coordination will be described with reference to FIG. 12B. See FIG. 7 for details of the scenario for the TX UE and the coordinator UE shown in FIG. 12B. In particular, the scenario of part (a) of FIG. 7 may be applied to this embodiment. Note, however, that the scenario of part (b) of FIG. 7 may also be applied. With reference to FIG. 12B, at step 1210, for inter-UE coordination, the TX UE (i.e., corresponding to UE-B) may request resource selection assistant information (RSAI, i.e., corresponding to coordinating info in FIG. 7) from the coordinator UE (i.e., corresponding to UE-A). Refer to the first embodiment for the method for a UE to be determined as a TX UE or coordinator UE for inter-UE coordination. Here, the RSAI request may be indicated by SCI (1st SCI or 2nd SCI). The TX UE may also indicate resource allocation information of the TX UE to the coordinator UE through SCI (1st SCI) when requesting the RSAI from the coordinator UE. Then, the coordinator UE may identify the resource allocation information of the TX UE from the corresponding information. Next, at step 1211 of FIG. 12B, whether there is a non-preferred resource in the resource allocation information of the TX UE indicated through SCI (1st SCI) due to utilization of inter-UE coordination scheme 2 is identified. Here, scheme 2 may correspond to inter-UE coordination scheme 2 described in the second embodiment. However, at step 1211 of FIG. 12B, the information used in inter-UE coordination scheme 2 may be limited to the following information that can address the half duplex problem. However, only some of the following information may be considered in the disclosure. Further, it is not limited to the information below. Note that UE-A can be replaced with coordinator UE and UE-B with TX UE in the following description.

Information determining resource allocation information of UE-B to be non-preferred in inter-UE coordination scheme 1

* Information 3: information about a resource selected by UE-A for its NR sidelink transmission

** As to information 1 above, since simultaneous transmission and reception is not possible due to half duplex if the resource selected by UE-A for its NR sidelink transmission overlaps in time and frequency with the resource reserved by UE-B through SCI (1st SCI, in other words, PSCCH), it is possible to determine whether the resource reserved by UE-B through SCI is suitable by use of information 1.
** As to information 1 above, the information about a resource selected by UE-A for its NR sidelink transmission may mean a set of allocated time-frequency resources selected for (re)transmission of one or more transport blocks (TBs).
** According to information 1 above, the information about a resource selected by UE-A for its NR sidelink transmission may include a whole set of allocated time-frequency resources selected for (re)transmission of one or more transport blocks (TBs) or may include only a subset of the whole set. If only a subset is included, the subset may be limited to only initial transmission resources. This may be because determining unsuitability of initial transmission resources is more important compared with a case of retransmission resources.

* Information 2: information about a set of allocated time-frequency resources selected by UE-A for another UE-B

** As to information 2 above, when the set of allocated time-frequency resources selected by UE-A for another UE-B overlaps in time and frequency with the resources reserved by UE-B through SCI (1st SCI, in other words, PSCCH), as simultaneous reception from different UE-Bs cannot be expected, it is possible to determine whether the resource reserved by UE-B through SCI is suitable based on information 2.

* Information 3: information about a resource scheduled or configured for UE-A's UL transmission

** As to information 3 above, when the resource scheduled or configured by UE-A for UL transmission overlaps in time and frequency with the resource reserved by UE-B through SCI (1st SCI, in other words, PSCCH), as simultaneous transmission and reception is not possible due to half duplex, it is possible to determine whether the resource reserved by UE-B through SCI is suitable based on information 3.

* Information 4: information about LTE sidelink transmission and reception of UE-A

** As to information 4 above, when the resource allocated for UE-A's LTE sidelink transmission and reception overlaps in time and frequency with the resource reserved by UE-B through SCI (1st SCI, in other words, PSCCH), as simultaneous transmission and reception is not possible due to half duplex or a resource conflict is expected, it is possible to determine whether the resource reserved by UE-B through SCI is suitable based on information 4.

* Information 5: information about UE-A's PSFCH transmission and reception

** As to information 5 above, since PSFCH transmission and reception is determined by the location of resources allocated for PSSCH transmission, it may be determined that the time and frequency location of the PSSCH resource reserved by UE-B through SCI (1st SCI, in other words, PSCCH) is not suitable for PSFCH transmission and reception, and thus it is possible to determine whether the resource reserved by UE-B through SCI is suitable based on information 5.

* Information 6: inter-UE coordination information received by UE-A from another UE

** As to information 6 above, when UE-A has received allocation information of suitable (preferred) or unsuitable (non-preferred) resources from another UE, if the resource indicated by allocation information determined therefrom overlaps in time and frequency with the resource reserved by UE-B through SCI (1st SCI, in other words, PSCCH), as simultaneous transmission and reception is not possible due to half duplex or a resource conflict is expected, it is possible to determine whether the resource reserved by UE-B through SCI is suitable based on information 8.

Referring back to FIG. 12B, if the coordinator UE is configured to use inter-UE coordination scheme 2 at step 1212, the coordinator UE may transmit the RSAI to the TX UE at step 1214. Here, as resource allocation information of UE-B is determined to be non-preferred, the RSAI may indicate only whether a resource conflict is expected with 1 bit.

Otherwise, if the coordinator UE is configured to use inter-UE coordination scheme 1 at step 1212 of FIG. 12B, at step 1213, a preferred resource is selected from the resource allocation information of the TX UE by using the sensing result of the coordinator UE. Refer to the second embodiment for configuring inter-UE coordination scheme 1 or inter-UE coordination scheme 2 at step 1212. Also, for details of step 1213, refer to inter-UE coordination scheme 1 described in the second and fourth embodiments. For example, step 1213 may be described as follows. In the following description, note that UE-A may be replaced with coordinator UE and UE-B with TX UE.

Method for selecting preferred resource of UE-B in inter-UE coordination scheme 1

Results of sensing performed by UE-A

In the above scheme, UE-A' sensing may mean SCI (1st SCI, in other words, PSCCH) decoding or SL RSRP (sidelink reference signal received power) measurement. Both SCI decoding and SL RSRP measurement may be included, or only one of them may be included. UE-A may select a resource suitable for UE-B's transmission through sensing, and for details on this, refer to the fourth embodiment. Specifically, referring to step 5) in the fourth embodiment, a resource that is not preferred in the TX UE's resource allocation information identified at step 1211 may be excluded from the candidate resources. In other words, note that inter-UE coordination scheme 1 and inter-UE coordination scheme 2 can be used and applied in combination. When inter-UE coordination scheme 1 is used at step 1213, if information obtained through inter-UE coordination scheme 2 is not available at step 1211, the corresponding information may be not used at step 1213.

Next, as shown in FIG. 12B, at step 1214, the coordinator UE may transmit the RSAI to the TX UE. Here, the RSAI may indicate location information in time and frequency of a set of preferred resources of UE-B selected at step 1213 through inter-UE coordination scheme 1.

As shown in FIG. 12B, when the coordinator UE transmits the RSAI to the TX UE at step 1214, utilization of inter-UE coordination method 1 or inter-UE coordination method 2 may be commonly indicated through 2nd SCI. However, the disclosure is not limited to the above indication method.

Finally as shown in FIG. 12B, upon receiving the RSAI from the coordinator UE, at step 1215, the TX UE may (re)select a transmission resource by using the RSAI information. For details on this, refer to the fifth embodiment.

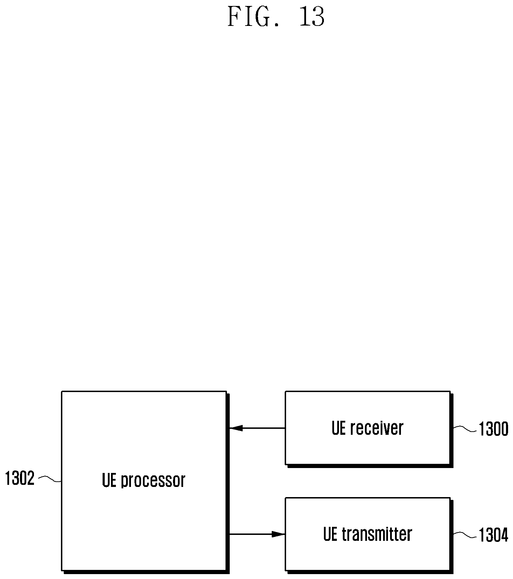

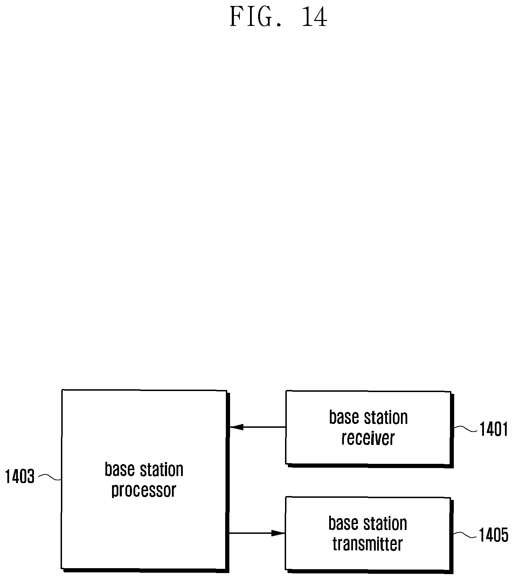

In order to perform the above embodiments of the disclosure, a transmitter, a receiver, and a processor of a UE and a base station are illustrated in FIGS. 13 and 14, respectively. In the above embodiments, a method for the UE to perform multi-antenna transmission and reception in the sidelink is illustrated, and to perform this, the receiver, the processor, and the transmitter of the base station and the UE must operate according to the embodiments, respectively.

FIG. 13 is a block diagram illustrating the internal structure of a UE according to an embodiment of the disclosure.

As shown in FIG. 13, the UE of the disclosure may include a UE receiver 1300, a UE transmitter 1304, and a UE processor 1302. The UE receiver 1300 and the UE transmitter 1304 may be collectively referred to as a transceiver in an embodiment of the disclosure. The transceiver may transmit/receive a signal to/from a base station. The signal may include control information and data. To this end, the transceiver may include an RF transmitter for up-converting and amplifying the frequency of a signal to be transmitted, and an RF receiver for low-noise amplifying and down-converting a received signal. In addition, the transceiver may receive a signal through a radio channel and output the signal to the UE processor 1302, and may transmit a signal output from the UE processor 1302 through a radio channel. The UE processor 1302 may control a series of processes so that the UE may operate according to the above-described embodiments of the disclosure.

FIG. 14 is a block diagram illustrating the internal structure of a base station according to an embodiment of the disclosure.

As shown in FIG. 14, the base station of the disclosure may include a base station receiver 1401, a base station transmitter 1405, and a base station processor 1403. The base station receiver 1401 and the base station transmitter 1405 may be collectively referred to as a transceiver in an embodiment of the disclosure. The transceiver may transmit/receive a signal to/from a UE. The signal may include control information and data. To this end, the transceiver may include an RF transmitter for up-converting and amplifying the frequency of a signal to be transmitted, and an RF receiver for low-noise amplifying and down-converting a received signal. In addition, the transceiver may receive a signal through a radio channel and output the signal to the base station processor 1403, and may transmit a signal output from the base station processor 1403 through a radio channel. The base station processor 1403 may control a series of processes so that the base station may operate according to the above-described embodiments of the disclosure.

Meanwhile, the embodiments of the disclosure disclosed in the present specification and drawings are only presented as specific examples to easily explain the technical content of the disclosure and help understanding of the disclosure, and are not intended to limit the scope of the disclosure. That is, it should be apparent to those skilled in the art that other modifications based on the technical idea of the disclosure can be carried out. In addition, the above embodiments can be applied in combination with each other as needed. For example, a base station and a UE may be operated according to a combination of parts of the embodiments of the disclosure.

## Claims

1. A first user equipment (UE) in a wireless communication system, comprising:

   a transceiver; and
   a controller that is configured to determine to transmit inter-UE coordination information to a second UE according to inter-UE coordination scheme 1, trigger transmission of the inter-UE coordination information, transmit the inter-UE coordination information to the second UE, and receive a signal transmitted by the second UE based on the inter-UE coordination information,
   wherein the inter-UE coordination information includes information about a resource set and type information of the resource set,
   wherein the type information of the resource set indicates whether the resource set is a preferred resource or a non-preferred resource.

2. The first user equipment of claim 1, wherein the inter-UE coordination information is transmitted through 2$^{nd}$-stage sidelink control information (SCI) transmitted on a physical sidelink shared channel (PSSCH) or is transmitted through a medium access control (MAC) control element (CE).

3. The first user equipment of claim 1, wherein the inter-UE coordination information is determined to be transmitted to the second UE based on a pre-configuration according to inter-UE coordination scheme 1.

4. The first user equipment of claim 1, wherein transmission of the inter-UE coordination information is triggered based on an explicit request from the second UE or a preset condition.

5. The first user equipment of claim 4, wherein triggering of transmission of the inter-UE coordination information in response to an explicit request from the second UE is based on establishment of unicast between the first UE and the second UE.

6. A second user equipment (UE) in a wireless communication system, comprising:

a transceiver; and

a controller that is configured to receive inter-UE coordination information from a first UE, and transmit a signal to the first UE based on the inter-UE coordination information,

wherein the inter-UE coordination information includes information about a resource set and type information of the resource set,

wherein the type information of the resource set indicates whether the resource set is a preferred resource or a non-preferred resource.

7.   The second user equipment of claim 6, wherein the inter-UE coordination information is received through $2^{nd}$-stage sidelink control information (SCI) transmitted on a physical sidelink shared channel (PSSCH) or is received through a medium access control (MAC) control element (CE).

8.   The second user equipment of claim 6, wherein the inter-UE coordination information is received from the second UE based on a pre-configuration according to inter-UE coordination scheme 1.

9.   The second user equipment of claim 6, wherein transmission of the inter-UE coordination information is triggered based on an explicit request from the second UE or a preset condition.

10.   The second user equipment of claim 9, wherein triggering of transmission of the inter-UE coordination information in response to an explicit request from the second UE is based on establishment of unicast between the first UE and the second UE.

11.   A method of a first user equipment (UE) in a wireless communication system, the method comprising:

determining to transmit inter-UE coordination information to a second UE according to inter-UE coordination scheme 1;

triggering transmission of the inter-UE coordination information;

transmitting the inter-UE coordination information to the second UE; and

receiving a signal transmitted by the second UE based on the inter-UE coordination information,

wherein the inter-UE coordination information includes information about a resource set and type information of the resource set,

wherein the type information of the resource set indicates whether the resource set is a preferred resource or a non-preferred resource.

12.   The method of claim 11, wherein the inter-UE coordination information is transmitted through $2^{nd}$-stage sidelink control information (SCI) transmitted on a physical sidelink shared channel (PSSCH) or is transmitted through a medium access control (MAC) control element (CE).

13.   The method of claim 11, wherein the inter-UE coordination information is determined to be transmitted to the second UE based on a pre-configuration according to inter-UE coordination scheme 1.

14.   The method of claim 11, wherein:

transmission of the inter-UE coordination information is triggered based on an explicit request from the second UE or a preset condition; and

triggering of transmission of the inter-UE coordination information in response to an explicit request from the second UE is based on establishment of unicast between the first UE and the second UE.

15.   A method of a second user equipment (UE) in a wireless communication system, the method comprising:

receiving inter-UE coordination information from a first UE; and

transmitting a signal to the first UE based on the inter-UE coordination information,

wherein the inter-UE coordination information includes information about a resource set and type information of the resource set,

wherein the type information of the resource set indicates whether the resource set is a preferred resource or a non-preferred resource.

# FIG. 1A

(a) In-coverage
scenario

gNB/eNB/RSU

Downlink (DL)    Downlink (DL)

Uplink (UL)

Sidelink (SL)

Sidelink (SL)

UE-1            UE-2

# FIG. 1B

(b) Partial coverage scenario

gNB/eNB/RSU

Downlink (DL)

Uplink (UL)

UE-1

Sidelink (SL)

Sidelink (SL)

UE-2

FIG. 1C

(c) Out-of-coverage
scenario

Sidelink (SL)

Sidelink (SL)

UE-1

UE-2

# FIG. 1D

(d) Inter-cell V2X communitation scenario

gNB/eNB/RSU

gNB/eNB/RSU

Downlink (DL)

Uplink (UL)

Downlink (DL)

Uplink (UL)

Sidelink (SL)

Sidelink (SL)

UE-1

UE-2

EP 4 304 275 A1

FIG. 2

[a] Unicast V2X communication

UE-1 201  ⟷  UE-2 202

[b] Groupcast V2X communication

Group A
UE-1 211
UE-2 212
UE-3 213

Group B
UE-4 214
UE-5 215
UE-6 216
UE-7 217

# FIG. 3

# FIG. 4

# FIG. 5

FIG. 6

[b]

Slot 601

606
PSSCH DMRS

GUARD
PSSCH 605
[2nd SCI] 604
PSCCH 603
AGC 602

Frequency / Sub-channel

time 0 1 2 3 4 5 6 7 8 9 10 11 12 13

[a]

Slot 601

606
PSSCH DMRS

GUARD
PSFCH 607
AGC (PSFCH) 607
GUARD
PSSCH 605
[2nd SCI] 604
PSCCH 603
AGC 602

Frequency / Sub-channel

time 0 1 2 3 4 5 6 7 8 9 10 11 12 13

FIG. 7

(a)

RX UE (UE-A : Coordinating UE)

701

Coordinating info

Data

702

TX UE (UE-B)

(b)

RX UE

703

UE-A : Coordinating UE

701

Coordinating info

Data

702

TX UE (UE-B)

EP 4 304 275 A1

# FIG. 8

## < Scheme 1 >

The coordinating info is the set of resources for UE-B's transmission

## < Scheme 2 >

The coordinating info is the presence of resource conflict indicated by UE-B's SCI

UE-A
(Coordinating UE)

Coordinating info

Data

UE-B
(TX UE)

EP 4 304 275 A1

FIG. 9

EP 4 304 275 A1

Sensing window (902)

Resource selection window (901)

$n-T_0$          $n-T_{proc,0}$   $n$   $n+T_1$                $n+T_2$   time

Triggering resource (re-)selection

FIG. 10

UE-A identifies the non-preferred resource(s)
indicated by UE-B's SCI — 1001

UE-A excludes non-preferred resource(s) in
Step-1 if any from the candidate resource set
for resource selection — 1002

UE-A selects the set of resource for UE-B's
transmission based on UE-A's sensing results — 1003

# FIG. 11

(a)

Resource reservation period for UE-B' TX resource
(1103)

Resource selection window (1100)

(1101) A selected resource for UE-A

(1102) A selected resource for UE-B

Frequency

time

(b)

Resource reservation period for UE-A' TX resource
(1106)

Resource selection window (1100)

(1104) A selected resource for UE-B

(1105) A selected resource for UE-A

Frequency

time

EP 4 304 275 A1

# FIG. 12A

1201
UE-A

1202
UE-B

1203
Coordinating info

1204
PSCCH/PSSCH

# FIG. 12B

START

A TX UE requests to a
coordinator UE for RSAI — 1210

Scheme 2 : The coordinator UE identifies the
non-preferred resource(s) indicated by the TX UE's SCI — 1211

If Scheme 2 is
configured — 1212

Yes

No (If Scheme 1 is configured)

Scheme 1 : The coordinator UE selects the set of preferred
resource for the TX UE's transmission by its sensing results — 1213

The coordinator UE transmits
RSAI to the TX UE — 1214

The TX UE perform resource
(re-)selection based on RSAI — 1215

END

FIG. 13

1302 — UE processor

UE receiver — 1300

UE transmitter — 1304

FIG. 14

base station
receiver — 1401

base station
processor
1403

base station
transmitter — 1405

## INTERNATIONAL SEARCH REPORT

| International application No. |
| --- |
| **PCT/KR2022/006148** |

| A. | CLASSIFICATION OF SUBJECT MATTER |
| --- | --- |
| | **H04W 72/04**(2009.01)i; **H04W 72/02**(2009.01)i; **H04W 4/40**(2018.01)i; **H04W 92/18**(2009.01)i |

According to International Patent Classification (IPC) or to both national classification and IPC

| B. | FIELDS SEARCHED |
| --- | --- |

Minimum documentation searched (classification system followed by classification symbols)

H04W 72/04(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 단말간(inter-UE), 협력(coordination), 사이드링크(sidelink), 자원할당(resource allocation)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | Moderator (LG Electronics). Feature lead summary for AI 8.11.1.2 Inter-UE coordination for Mode 2 enhancements. R1-2104103, 3GPP TSG RAN WG1 #104bis-e. 21 April 2021. See sections 1-4. | 1-15 |
| Y | APPLE. Discussion on Inter-UE Coordination. R1-2103122, 3GPP TSG RAN WG1 #104bis-e. 07 April 2021. See sections 2.1.3 and 2.4. | 1-15 |
| A | SAMSUNG. On Inter-UE Coordination for Mode2 Enhancements. R1-2103258, 3GPP TSG RAN WG1 #104bis-e. 06 April 2021. See section 2. | 1-15 |
| A | CATT et al. Discussion on inter-UE coordination in Mode 2 enhancements. R1-2102607, 3GPP TSG RAN WG1 #104bis-e. 07 April 2021. See sections 2-6. | 1-15 |
| A | KR 10-2020-0126342 A (VOLKSWAGEN AKTIENGESELLSCHAFT) 06 November 2020 (2020-11-06) See paragraphs [0033]-[0050]; and claims 1-15. | 1-15 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 August 2022** | **01 August 2022** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/006148**

| Patent document cited in search report | | Publication date (day/month/year) | Patent family member(s) | | Publication date (day/month/year) |
|---|---|---|---|---|---|
| KR 10-2020-0126342 | A | 06 November 2020 | CN 111866812 | A | 30 October 2020 |
| | | | EP 3735077 | A1 | 04 November 2020 |
| | | | US 11252737 | B2 | 15 February 2022 |
| | | | US 2020-0344764 | A1 | 29 October 2020 |

Form PCT/ISA/210 (patent family annex) (July 2019)